# DEMANDE DE BREVET EUROPEEN

(11) **EP 3 757 144 A1**
(43) Date de publication de la demande: **30.12.2020**
(21) Numéro de dépôt: 20182218.6
(22) Date de dépôt: 25.06.2020
(51) Int. Cl.: C08G 18/10, C08G 18/12, C08G 18/22, C08G 18/48, C08G 18/67, C08G 18/76, C09J 7/38, C09J 175/16

(54) **COMPOSITION ADHÉSIVE THERMOFUSIBLE SENSIBLE À LA PRESSION À BASE DE POLYURÉTHANE-(MÉTH)ACRYLIQUE**

(30) Priorité: 27.06.2019 FR 1907003
(71) Demandeur: Bostik SA, 92700 Colombes (FR)
(72) Inventeur: MICHAUD, Guillaume, 60280 VENETTE (FR); WIEGAND, Aurélien, 60280 VENETTE (FR); FOUQUAY, Stéphane, 60280 VENETTE (FR)
(74) Mandataire: Arkema Patent

(57) **Abrégé**

La présente invention concerne une composition adhésive thermofusible sensible à la pression comprenant :
(a) au moins un polyuréthane comprenant au moins deux fonctions terminales T de formule (I) suivante :

-X-(C=O)-CH(R^{V})=CH₂ (I)

(b) au moins une résine tackifiante choisie parmi les résines suivantes :
(b1) les résines terpènes-phénoliques ;
(b2) les résines issues de la polymérisation d'alpha-méthyl styrène, suivie éventuellement d'une réaction avec au moins un phénol;
(b3) les résines polymériques (éventuellement au moins partiellement hydrogénées) issues de coupes aromatiques principalement en C9 ; et
(c) au moins un inhibiteur de polymérisation ;
ladite composition étant caractérisée en ce que :
- le ratio massique polyuréthane(s) (a) : résine(s) tackifiante(s) (b) va de 4 : 6 à 6 : 4 ; et
- ledit polyuréthane (a) a une fonctionnalité moyenne en fonctions de formule (I) strictement supérieure à 1,9.

## Description

### DOMAINE DE L'INVENTION

La présente invention concerne une composition adhésive thermofusible sensible à la pression (ou HMPSA) à base de polyuréthane (méth)acrylique.

L'invention concerne également ses utilisations.

### ARRIERE-PLAN TECHNOLOGIQUE

Les adhésifs sensibles à la pression (également dénommés colles auto-adhésives ou encore, en anglais, "Pressure Sensitive Adhesives" (ou PSA) sont des substances conférant au support qui en est revêtu un pouvoir collant immédiat à température ambiante. Souvent désigné par le terme anglais de "tack" ou encore parfois par le terme de "pégosité", ce pouvoir collant immédiat permet l'adhésion instantanée dudit support auto-adhésif à toutes sortes de substrats, sous l'effet d'une pression légère et brève. En raison de son pouvoir adhésif, habituellement évalué par un test de pelage (ou peel, en anglais), ledit support auto-adhésif est alors fermement fixé audit substrat, au moyen d'un joint adhésif.

Les PSA sont largement utilisés pour la fabrication d'articles auto-adhésifs, tels que par exemple d'étiquettes auto-adhésives qui sont fixées sur des articles à des fins de présentation d'informations (telles que code barre, dénomination, prix) et/ou à des fins décoratives. Les PSA sont également mis en œuvre pour la fabrication de rubans auto-adhésifs d'utilisations variées. On peut citer par exemple outre le ruban adhésif transparent largement utilisé dans la vie quotidienne : la mise en forme et l'assemblage d'emballages en carton ; la protection de surfaces pour les travaux de peinture, dans la construction ; le maintien de câbles électriques dans l'industrie des transports ; le collage des moquettes par rubans adhésifs à double face.

En vue de la fabrication d'étiquettes et/ou rubans auto-adhésifs, les PSA sont souvent appliqués par des procédés d'enduction en continu sur la totalité de la surface d'une couche support (le cas échéant imprimable) de grandes dimensions, à raison d'une quantité (généralement exprimée en g/m²) et désignée ci-après par le terme de "grammage". La couche support est par exemple du papier ou un film constitué d'un matériau polymère à une ou plusieurs couches. La couche de composition auto-adhésive qui recouvre la couche support peut être elle-même recouverte d'une couche anti-adhérente protectrice (souvent dénommée par l'appellation anglaise de "release liner"), par exemple constituée d'un film siliconé. Le système multicouche obtenu est généralement conditionné par enroulement sous forme de larges bobines ayant jusqu'à deux mètres de largeur et un mètre de diamètre, qui peuvent être stockées et transportées.

Ces systèmes multicouches peuvent être ultérieurement convertis en étiquettes auto-adhésives applicables par l'utilisateur final, au moyen de procédés de transformation qui incluent l'impression des éléments informatifs et/ou décoratifs désirés sur la face imprimable de la couche support, puis la découpe à la forme et aux dimensions souhaitées. La couche anti-adhérente protectrice peut être facilement enlevée sans modification de la couche d'adhésif qui reste fixée sur la couche support. Après séparation de sa couche anti-adhérente protectrice, l'étiquette est appliquée sur l'article à revêtir soit manuellement, soit à l'aide d'étiqueteuses sur des chaînes automatisées de conditionnement.

Ces systèmes multicouches peuvent être également transformés en rubans auto-adhésifs par découpe et conditionnement en rouleaux de largeur et de longueur déterminée.

Les PSA permettent, en raison de leur tack élevé à température ambiante, une prise ou accroche rapide de l'étiquette et/ou du ruban auto-adhésifs sur le substrat (ou article) à revêtir (par exemple, s'agissant d'étiquettes, sur des bouteilles ou bien, s'agissant de rubans, sur des cartons d'emballage à mettre en forme), propre à l'obtention de cadences de production industrielle importantes.

Dans le cadre de la présente demande, on s'est intéressé à une catégorie particulière de PSA : les HMPSA ou encore « Hot Melt Pressure Sensitive Adhesive » en anglais, qui sont des adhésifs thermofusibles et qui possèdent des propriétés au moins comparables aux PSA, notamment en terme de force d'adhésion, de tack et d'auto-adhésion.

Typiquement, les compositions à la base de ces adhésifs sont solides ou quasi-solides à température ambiante, et nécessitent d'être fondues avant dépôt (ou enduction) sur un support. Après refroidissement et éventuellement réticulation de la composition appliquée, le support est revêtu d'un joint adhésif possédant un tack lequel permet avantageusement son adhésion instantanée à un substrat sous l'effet d'une pression légère et brève.

Il existe des compositions adhésives thermofusibles sensibles à la pression à base de polyuréthane comprenant des terminaisons -NCO. Toutefois, ces compositions comprennent souvent une quantité résiduelle de composés diisocyanates de faible masse molaire provenant des monomères diisocyanates (de masse molaire inférieure à 300 g/mol) utilisés en excès et n'ayant pas réagi lors de la synthèse du polyuréthane. Il a été observé que la majeure partie des compositions adhésives thermofusibles réticulables de l'art antérieur à base de polyuréthane à terminaison NCO, sont formulées à partir du polyuréthane obtenu directement après synthèse, et contiennent de ce fait l'ensemble des monomères diisocyanates résiduels (non réagis) issus de la synthèse du polyuréthane. Au final, la composition adhésive peut comprendre des quantités plus ou moins importantes de monomères diisocyanates, ce qui peut conduire à un certain nombre de problèmes, dont entre autres, un risque de toxicité pour l'homme et son environnement. En effet, la présence d'une teneur résiduelle en monomères diisocyanates libres peut générer en présence d'humidité des amines primaires aromatiques potentiellement néfastes pour la santé lorsque celles-ci sont de nature aromatique (PAA). Pour les diisocyanates aliphatiques tels que l'hexaméthylène diisocyanate (HDI, de masse molaire égale à 168 g/mol environ) ou l'isophorone diisocyanate (IPDI, de masse molaire égale à 222 g/mol environ), et pour les diisocyanates aromatiques tels que le toluène diisocyanate (TDI, de masse molaire égale à 174 g/mol environ) ou le diisocyanate de diphényle méthane (MDI, de masse molaire égale à 250 g/mol environ), cette teneur limite a été fixée à 0,1% en poids du produit en terme de réglementation. La quantité de ces diisocyanates et de leurs amines correspondantes, peut être évaluée de manière bien connue par l'homme du métier à l'aide de tests pratiqués dans des conditions standards.

Il existe également des compositions adhésives PSA réticulables par UV, à base de copolymères séquences acryliques, styréniques ou d'uréthane. Ces compositions présentent certains inconvénients lors du traitement et de la formation de films. Les systèmes PSA à base d'acrylique sont généralement des systèmes adhésifs de type thermofusible (HMPSA), des systèmes adhésifs à base de solvant ou des systèmes adhésifs à base d'eau qui facilitent un procédé de revêtement. Les systèmes PSA à base de solvant contiennent des composés organiques volatils, difficiles à évaporer. Une telle difficulté limite leur application en raison d'exigences environnementales et de performances. La présence d'une teneur importante ou résiduelle en monomères (méth)acryliques hydroxylés libres peut également générer des émissions toxiques et des problèmes d'irritation et de sensibilisation par voie pulmonaire (asthme) ou cutanée (dermite de contact allergique) pour l'homme lors de l'utilisation de la composition adhésive, notamment lors de l'application de celle-ci. Pour lutter efficacement contre cette exposition aux monomères, des mesures particulières doivent être prises, par exemple la mise en place de mesures de protection individuelle pour éviter tout contact avec la peau (masque et respirateur, vêtement imperméable et chimiquement résistant et imperméable) et de protection collective (local ventilé). Toutefois, cela génère des coûts et contraintes supplémentaires allant à l'encontre de la mise à disposition d'un procédé de préparation industriel économique et rentable. En outre, lorsque l'on envisage d'utiliser des colles réactives à base de polyuréthane-(méth)acrylique(s) dans la réalisation de films adhésifs pour emballages destinés aux produits alimentaires, il est souhaitable que ces colles contiennent des teneurs réduites en monomères (méth)acryliques et en monomères diisocyanates car ceux-ci sont susceptibles de migrer par exemple à travers les couches d'emballage et de contaminer le contenu de l'emballage au contact de celui-ci.

Pour les hydroxyalkyl (méth)acrylates tels que le 2-hydroxyéthyl acrylate, le 2-hydroxypropyle acrylate, le 2-hydroxyéthyl méthacrylate et le 2-hydroxypropyl méthacrylate cette teneur limite a été fixée à moins de 0,2 % en poids du produit, préférentiellement à moins de 0,02 % en poids du produit ; et pour les hydroxyalkyl (méth)acrylamides telles que la 2-hydroxyéthyl acrylamide, la 2-hydroxypropyl acrylamide, cette valeur a été fixée à moins de 0,1% en poids du produit.

La plupart des compositions adhésives comprenant des polyuréthane-(méth)acrylates ne donnent donc pas entière satisfaction. En raison notamment des inconvénients mentionnés ci-dessus, la plupart des règlementations obligent à étiqueter tout produit contenant une teneur en certains composés supérieure à une certaine limite autorisée.

Il existe donc un besoin de mettre à disposition des compositions HMPSA à base de polyuréthane-(méth)acrylique(s) permettant de remédier au moins en partie à au moins l'un des inconvénients susmentionnés.

En particulier, il existe un besoin de mettre à disposition des compositions HMPSA à base de polyuréthane-(méth)acrylique(s) ayant une teneur réduite en monomères (méth)acryliques et monomères diisocyanates libres ou résiduels, notamment en une teneur inférieure aux seuils d'étiquetage réglementaire, et qui conduisent à des adhésifs sensibles à la pression, possédant de bonnes propriétés adhésives.

### DESCRIPTION DE L'INVENTION

### A. Composition

La présente invention concerne une composition adhésive thermofusible sensible à la pression comprenant :
(a) au moins un polyuréthane comprenant au moins deux fonctions terminales T de formule (I) suivante :

   -X-(C=O)-CH(R^{V})|=CH₂ (I)

   dans laquelle R^{V} représente un atome d'hydrogène ou un radical méthyle, X représente -O- ou -NR'^{N}- avec R'^{N} représentant un atome d'hydrogène ou un radical alkyle linéaire ou ramifié comprenant de 1 à 20 atomes de carbone, de préférence de 1 à 12 atomes de carbone, préférentiellement de 1 à 8 atomes de carbones, X représentant avantageusement -O- ;
(b) au moins une résine tackifiante choisie parmi les résines suivantes :
   (b1) les résines terpènes-phénoliques ;
   (b2) les résines issues de la polymérisation d'alpha-méthyl styrène, suivie éventuellement d'une réaction avec au moins un phénol;
   (b3) les résines polymériques (éventuellement au moins partiellement hydrogénées) issues de coupes aromatiques principalement en C9 ; et
(c) au moins un inhibiteur de polymérisation ;
   ladite composition étant caractérisée en ce que :
   - le ratio massique polyuréthane(s) (a) : résine(s) tackifiante(s) (b) va de 4 : 6 à 6 : 4 ; et
   - ledit polyuréthane (a) a une fonctionnalité moyenne en fonctions de formule (I) strictement supérieure à 1,9, de préférence supérieure ou égale à 2.

Dans la présente demande, en l'absence d'indication contraire :
- les quantités exprimées sous la forme de pourcentage correspondent à des pourcentages poids/poids ;
- les masses molaires moyennes en nombre (Mn) des résines tackifiantes, exprimées en dalton (Da), sont déterminées par chromatographie par perméation de gel (GPC), la colonne étant calibrée avec des étalons de Polystyrène (PS) ;
- l'indice hydroxyle d'un composé alcoolique ou d'une résine tackifiante représente le nombre de fonctions hydroxyles par gramme de produit, lequel est exprimé sous la forme du nombre équivalent de milligrammes de potasse (KOH) utilisés dans le dosage des fonctions hydroxyles, par gramme de produit ;
- la mesure de viscosité à 23°C peut se faire à l'aide d'un viscosimètre Brookfield selon la norme ISO 2555. Typiquement, la mesure réalisée à 23°C peut se faire à l'aide d'un viscosimètre Brookfield RVT, d'une aiguille adaptée au domaine de viscosité et à une vitesse de rotation de 20 tours par minute (tr/mn). La viscosité d'un produit est de préférence mesurée au moins 24 heures après fabrication dudit produit ;
- les masses moléculaires moyennes en nombre (Mn) des polyols exprimées en g/mole sont calculées à partir de leurs indices d'hydroxyles et de leurs fonctionnalités.

### Polyuréthane (a)

De préférence, les fonctions terminales T de formule (I) susmentionnées se trouvent sur les extrémités de la chaîne principale du polyuréthane.

La teneur massique totale de polyuréthane(s) (a) dans la composition peut aller de 30% à 70% en poids, de préférence de 35% à 65% en poids, plus préférentiellement de 40% à 60% en poids par rapport au poids total de la composition.

Par « fonctionnalité moyenne en fonctions de formule (I) », on entend le nombre moyen de fonctions de formule (I) par mole de polyuréthane (a).

Le polyuréthane (a) a de préférence une viscosité à 23°C allant de 10 000 à 100 000 mPa.s (millipascal seconde), et plus préférentiellement une viscosité inférieure à 50 000 mPa.s.

Le polyuréthane (a) susmentionné comprenant au moins deux fonctions terminales T peut être obtenu par réaction d'un polyuréthane comprenant au moins deux fonctions terminales -NCO (de préférence aux extrémités de la chaîne principale), et d'au moins composé choisi parmi un ester hydroxylé de l'acide (méth)acrylique ou une amide hydroxylée de l'acide (méth)acrylique.

Dans le cadre de l'invention, et sauf mention contraire, on entend par « ester hydroxylé de l'acide (méth)acrylique », un ester de l'acide acrylique ou de l'acide méthacrylique dont le radical ester est substitué par au moins un groupe hydroxyle. On peut par exemple représenter un ester hydroxylé de l'acide (méth)acrylique par la formule suivante:

CH₂=CR^{V}-C(=O)-O-R^{O}

dans laquelle R^{V} représente un atome d'hydrogène ou un radical méthyle, et R^{O} représente un radical organique substitué par au moins un groupe hydroxyle.

Selon un mode de réalisation, l'ester hydroxylé de l'acide (méth)acrylique a la formule (II) suivante :

CH₂=CR^{V}-C(=O)-O-R^{AC}-OH (II)

dans laquelle R^{V} représente un atome d'hydrogène ou un radical méthyle, R^{AC} représente un radical hydrocarboné divalent linéaire ou ramifié, aliphatique ou cyclique, saturé ou insaturé, comprenant de préférence de 2 à 240 atomes de carbone, et/ou éventuellement interrompu par un ou plusieurs hétéroatomes (tel que par exemple N, O, S, et en particulier O), et/ou éventuellement interrompu par un ou plusieurs groupes divalents -N(R"^{N})- avec R"^{N} représentant un radical alkyle linéaire ou ramifié comprenant de 1 à 22 atomes de carbone (amine tertiaires), -C(=O)O- (ester), -C(=O)NH- (amide), -NHC(=O)O- (carbamate), -NHC(=O)-NH- (urée), ou -C(=O)- (carbonyle), et/ou étant éventuellement substitué.

De préférence, l'ester hydroxylé de l'acide (méth)acrylique a l'une des formules suivantes :
- Formule (II-1) :

   CH₂=CR^{V}-C(=O)-O-R^{AC1}-OH (II-1)

   dans laquelle R^{V} représente un atome d'hydrogène ou un radical méthyle, R^{AC1} représente un radical hydrocarboné divalent linéaire ou ramifié, aliphatique ou cyclique, saturé ou insaturé, comprenant de 2 à 22 atomes de carbone, de préférence de 2 à 18, préférentiellement de 2 à 14, et encore plus avantageusement de 2 à 6 atomes de carbone ;
- Formule (II-2) :

   CH₂=CR^{V}-C(=O)-O-R^{AC2}-O-[C(=O)-(CH₂)ᵣ-O]ₛ-H (II-2)

   dans laquelle :
   - r est un nombre entier allant de 1 à 10, de préférence de 2 à 5, et préférentiellement r est égal à 5 ;
   - s est un nombre entier allant de 1 à 10, s étant de préférence égal à 2 ;
   - R^{V} représente un atome d'hydrogène ou un radical méthyle ;
   - R^{AC2} représente un radical hydrocarboné divalent linéaire ou ramifié, aliphatique ou cyclique, saturé ou insaturé, comprenant de 2 à 22 atomes de carbone, de préférence de 2 à 18, préférentiellement de 2 à 14, et encore plus avantageusement de 2 à 6 atomes de carbone ;
- Formule (II-3) :

   CH2=CR^{V}-C(=O)-O-[R^{AC3}-O]ₜ-H (II-3)

   dans laquelle R^{V} représente un atome d'hydrogène ou un radical méthyle, R^{AC3} représente un radical hydrocarboné divalent linéaire ou ramifié comprenant de 2 à 4 atomes de carbone, t est un nombre entier allant de 2 à 120, de préférence de 1 à 10, t étant encore plus préférentiellement égal à 2 ou 3.

Parmi les esters hydroxylés des acides acrylique et méthacrylique de formule (II-1), on peut citer par exemple le 2-hydroxyéthyl acrylate (HEA), le 2-hydroxypropyl acrylate (HPA), 2-hydroxybutyl acrylate (2-HBA) et le 4-hydroxybutyl acrylate (4-HBA) disponibles chez SARTOMER, COGNIS ou BASF, le 2-hydroxyéthyl méthacrylate (HEMA) et le 2-hydroxypropyl méthacrylate (HPMA) disponibles chez EVONIK, le 2-hydroxybutyl méthacrylate (2-HBMA) et le 4-hydroxybutyl méthacrylate (4-HBMA) disponibles chez SIGMA-ALDRICH.

Parmi les esters hydroxylés des acides acrylique et méthacrylique de formule (II-2) ci-dessus, on peut citer par exemple le polycaprolactone acrylate SR 495B (CAPA) disponible chez SARTOMER ou le hydroxyéthylcaprolactone acrylate (HECLA) disponible chez BASF.

Parmi les dérivés éthoxylés et/ou propoxylés des acides acrylique et méthacrylique de formule (II-3) susmentionnée,, on peut par exemple citer le BLEMMER ® AP-150, le BLEMMER ® AP-200, le BLEMMER ® AP-400, le BLEMMER ® AP-550, le BLEMMER ® AP-800, le BLEMMER ® AP-1000, le BLEMMER ® AE-90, le BLEMMER ® AE-150, le BLEMMER ® AE-200, le BLEMMER ® AE-350, le BLEMMER ® AE-400, commercialisés par NIPPON OIL & FATS CORPORATION, ou encore le SR 604 de chez SARTOMER.

De préférence, l'ester hydroxylé de l'acide (méth)acrylique a la formule (II-1) susmentionnée, et plus préférentiellement l'une des formules (II-1-1), (II-1-2), (II-1-3) ou (II-1-4) suivantes :
- CH₂=CH-C(=O)-O-CH2-CH2-OH (II-1-1)

   : 2-hydroxyéthylacrylate ;
- CH₂=C(Me)-C(=O)-O-CH2-CH2-OH (II-1-2)

   : 2-hydroxyéthylméthacrylate ;
- CH₂=CH-C(=O)-O-CH2-CH(Me)-OH (II-1-3)

   : 2-hydroxypropylacrylate ;
- CH₂=C(Me)-C(=O)-O-CH2-CH(Me)-OH (II-1-4)

   : 2-hydroxypropylméthacrylate.

Dans le cadre de l'invention, et sauf mention contraire, on entend par « amide hydroxylée de l'acide (méth)acrylique », une amide de l'acide acrylique ou de l'acide méthacrylique dont le radical amide est substitué par au moins un groupe hydroxyle. On peut par exemple représenter une amide hydroxylée de l'acide (méth)acrylique par la formule suivante :

CH₂=CR^{V}-C(=O)-N(R'^{N})-R^{N}

dans laquelle R^{V} représente un atome d'hydrogène ou un radical méthyle, R^{N} représente un radical organique substitué par au moins un groupe hydroxyle, et R'^{N} représentant H ou un radical alkyle comprenant de 1 à 22 atomes de carbone, de préférence de 1 à 18, préférentiellement de 1 à 14, et encore plus avantageusement de 1 à 6 atomes de carbone.

Selon un mode de réalisation, l'amide hydroxylée de l'acide (méth)acrylique a la formule (II') suivante :

CH₂=CR^{V}-C(=O)-N(R'^{N})-R^{AM}-OH (II')

dans laquelle R^{V} représente un atome d'hydrogène ou un radical méthyle, R'^{N} est tel que défini ci-dessus, et R^{AM} représente un radical hydrocarboné divalent linéaire ou ramifié, aliphatique ou cyclique, saturé ou insaturé, comprenant de préférence de 1 à 240 atomes de carbone, et/ou éventuellement interrompu par un ou plusieurs hétéroatomes (tel que par exemple N, O, S, et en particulier O), et/ou éventuellement interrompu par un ou plusieurs groupes divalents -N(R"^{N})- avec R"^{N} étant tel que défini ci-dessus, et/ou étant éventuellement substitué.

Selon un mode de réalisation, l'amide hydroxylée de l'acide (méth)acrylique a l'une des formules suivantes :
- Formule (II'-1) :

   CH₂=CR^{V}-C(=O)-N(R'^{N})-R^{AM1}-OH (II'-1)

   dans laquelle R^{V} représente un atome d'hydrogène ou un radical méthyle, R'^{N} est tel que défini précédemment, et R^{AM1} représente un radical hydrocarboné divalent linéaire ou ramifié, aliphatique ou cyclique, saturé ou insaturé, comprenant de 1 à 22 atomes de carbone, de préférence de 1 à 18, préférentiellement de 1 à 14, et encore plus avantageusement de 1 à 6 atomes de carbone ;
- Formule (II'-2) :

   CH₂=CR^{V}-(=O)-N(R'^{N})-R^{AM2}-O-[C(=O)-(CH2)ᵣ'-O]ₛ'-H (II'-2)

   dans laquelle :
   - R'^{N} est tel que défini précédemment ;
   - r' est un nombre entier allant de 1 à 10, de préférence de 1 à 5, et préférentiellement r est égal à 5 ;
   - s' est un nombre entier allant de 1 à 10, s étant de préférence égal à 2 ;
   - R^{V} représente un atome d'hydrogène ou un radical méthyle ;
   - R^{AM2} représente un radical hydrocarboné divalent linéaire ou ramifié, aliphatique ou cyclique, saturé ou insaturé, comprenant de 2 à 22 atomes de carbone, de préférence de 2 à 18, préférentiellement de 2 à 14, et encore plus avantageusement de 2 à 6 atomes de carbone ;
- Formule (II'-3) :

   CH₂=CR^{V}-C(=O)-N(R'^{N})-[R^{AM3}-O]_{t'}-H (II'-3)

   dans laquelle R^{V} représente un atome d'hydrogène ou un radical méthyle, R'^{N} est tel que défini précédemment, R^{AM3} représente un radical alkylène divalent linéaire ou ramifié comprenant de 2 à 4 atomes de carbone, t' est un nombre entier allant de 2 à 120, de préférence de 1 à 10, t' représentant de préférence 2 ou 3.

De préférence, l'amide hydroxylée de l'acide (méth)acrylique a la formule (II'-1) susmentionnée, et en particulier l'une des formules (II'-1-1) ou (II'-1-2) suivantes :
- CH₂=CH-C(=O)-NH-CH₂-CH₂-OH (II'-1-1)

   : 2-hydroxyéthyl acrylamide ;
- CH₂=C(Me)-C(=O)-NH-CH₂-CH₂-OH (II'-1-1)

   : 2-hydroxyéthyl méthacrylamide ;
- CH₂=CH-C(=O)-NH-CH₂-CH(Me)-OH (II'-1-2)

   : 2-hydroxypropyl acrylamide ;
- CH₂=C(Me)-C(=O)-NH-CH₂-CH(Me)-OH (II'-1-2)

   : 2-hydroxypropyl méthacrylamide.

De préférence, le polyuréthane (a) susmentionné comprenant au moins deux fonctions terminales T de formule (I) est préparé par un procédé comprenant les étapes suivantes:
- E1) la préparation d'un polyuréthane comprenant au moins deux fonctions terminales NCO (de préférence aux extrémités de la chaîne principale) par une réaction de polyaddition:
   i) d'au moins un polyisocyanate de préférence choisi parmi les diisocyanates, les triisocyanates, et leurs mélanges ;
   ii) avec au moins un polyol, de préférence choisi parmi les polyéther polyols, les polyester polyols, les polyène polyols, les polycarbonate polyols, les poly(éther-carbonate) polyols, les polymères à terminaisons -OH, et leurs mélanges ;
   dans des quantités telles que le rapport molaire NCO/OH, noté (r1), est strictement supérieur à 1, de préférence va de 1,60 à 1,90, et préférentiellement va de 1,65 à 1,85 ;
   et
- E2) la réaction du produit formé à l'issue de l'étape E1) avec au moins un ester hydroxylé de l'acide (méth)acrylique tel que défini ci-dessus (de préférence de formule (II-1-1) ou (II-1-2) susmentionnée) ou au moins une amide hydroxylée de l'acide (méth)acrylique telle que définie ci-dessus (de préférence de formule (II'-1-1) ou (II'-1-2) susmentionnée), dans des quantités telles que le rapport molaire OH/NCO, noté (r2), est inférieur ou égal à 1,00, de préférence allant de entre 0,75 à 1,00, et préférentiellement entre 0,80 à 0,90.

Préférentiellement, l'étape E2) est réalisée avec au moins un ester hydroxylé de l'acide acrylique tel que défini ci-dessus, de préférence de formule (II-1-1) ou (II-1-2) susmentionnée.

Dans le cadre de l'invention, et sauf mention contraire, (r1) est le rapport molaire NCO/OH correspondant au rapport molaire du nombre de groupes isocyanates (NCO) sur le nombre de groupes hydroxyles (OH) portés par l'ensemble des polyisocyanate(s) et polyol(s) présents dans le milieu réactionnel de l'étape E1).

Lorsque le polyuréthane à terminaisons NCO est obtenu lors de l'étape E1) à partir d'un mélange de polyisocyanates ou de plusieurs polyisocyanates ajoutés successivement, le calcul du rapport (r1) tient compte d'une part des groupes NCO portés par l'ensemble du(des) polyisocyanate(s) présent(s) dans le milieu réactionnel de l'étape E1), et d'autre part des groupes OH portés par le(s) polyol(s) présent(s) dans le milieu réactionnel de l'étape E1).

Dans le cadre de l'invention, et sauf mention contraire, (r2) est le rapport molaire OH/NCO correspondant au rapport molaire du nombre de groupes hydroxyles (OH) sur le nombre de groupes isocyanates (NCO) portés respectivement par l'ensemble du(des) alcool(s), et des isocyanate(s) (s'agissant notamment du polyuréthane à terminaisons NCO et éventuellement le(s) polyisocyanate(s) non réagi(s) à l'issue de l'étape E1)) présents dans le milieu réactionnel de l'étape E2).

### Etape E1)

### Polyol(s)

Le(s) polyol(s) utilisable(s) selon l'invention peu(ven)t être choisi(s) parmi ceux dont la masse molaire moyenne en nombre (Mn) va de 2 000 à 12 000 g/mol, de préférence de 3 000 à 11 000 g/mol, et plus préférentiellement de 4 000 à 10 000 g/mol.

De préférence, leur fonctionnalité hydroxyle va de 2 à 3, préférentiellement 2.

Le(s) polyol(s) utilisable(s) selon l'invention peut(vent) présenter un indice hydroxyle (IOH) (moyen) allant de 9 à 85 milligrammes de KOH par gramme de polyol (mg KOH/g), de préférence de 10 0 56 mg KOH/g, préférentiellement de 11 à 42 mg KOH/g.

Selon un mode de réalisation, l'indice d'hydroxyle de polyol(s) présentant une fonctionnalité hydroxyle de 2 va de 9 à 56 mg KOH/g, de préférence de 10 à 37 mg KOH/g, et plus préférentiellement de 11 à 37 mg KOH/g.

Selon un mode de réalisation, l'indice d'hydroxyle de polyol(s) présentant une fonctionnalité hydroxyle de 3 va de 14 à 84 mg KOH/g, et de préférence de 15 à 56 mg KOH/g et plus préférentiellement de 17 à 42 mg KOH/g.

Le(s) polyol(s) utilisable(s) peu(ven)t être choisi(s) parmi les polyéther polyols, polyester polyols, les polyène polyols insaturés ou hydrogénés, les polycarbonate polyols, les poly(éther-carbonate) polyols, les polymères à terminaisons -OH, et leurs mélanges.

Le(s) polyol(s) utilisable(s) peu(ven)t être choisi(s) parmi les polyols aromatiques, les polyols aliphatiques, les polyols arylaliphatiques et les mélanges de ces composés.

Le(s) polyol(s) utilisable(s) selon l'invention est (sont) de préférence choisi(s) parmi les polyéther polyols, les polyester polyols, et leurs mélanges.

Plus préférentiellement, le(s) polyéther polyol(s) utilisable(s) selon l'invention est (sont) de préférence choisi(s) parmi les polyoxyalkylène diols ou polyoxyalkylène triols, dont la partie alkylène, linéaire ou ramifiée, comprend de 1 à 4 atomes de carbone, plus préférentiellement de 2 à 3 atomes de carbone.

Plus préférentiellement, le(s) polyester polyol(s) utilisable(s) selon l'invention est (sont) de préférence choisi(s) parmi les polyester diols ou polyester triols.

A titre d'exemple de polyoxyalkylène polyols utilisables selon l'invention, on peut citer les polyoxypropylène diols ou triols (aussi désignés par polypropylène glycol (PPG) diols ou triols) ayant une masse moléculaire moyenne en nombre (Mn) allant de 2 000 à 12 000 g/mol et leurs mélanges.

Les polyéther polyols suscités peuvent être préparés de manière conventionnelle, et sont largement disponibles dans le commerce. Ils peuvent être obtenus par polymérisation de l'oxyde d'alkylène correspondant en présence d'un catalyseur basique (par exemple de la potasse) ou d'un catalyseur à base d'un double complexe métal-cyanure.

A titre d'exemple de polyéther diol, on peut citer le polyoxypropylène diol commercialisé sous la dénomination « ACCLAlM® » par la société BAYER, tels que « ACCLAIM® 12200 » de masse molaire moyenne en nombre voisine de 11335 g/mol et dont l'indice hydroxyle va de 9 à 11 mg KOH/g, « ACCLAIM® 8200 » de masse molaire moyenne en nombre voisine de 8057 g/mol et dont l'indice hydroxyle va de 13 à 15 mg KOH/g, et « ACCLAIM® 4200 » de masse molaire moyenne en nombre voisine de 4020 g/mol, et dont l'indice hydroxyle va de 26,5 à 29,5 mg KOH/g obtenus, de façon connue, par polymérisation de l'oxyde d'alkylène correspondant en présence d'un catalyseur à base d'un double complexe métal-cyanure.

A titre d'exemple de polyéther triol, on peut citer le polyoxypropylène triol commercialisé sous la dénomination « VORANOL® CP3355 » par la société DOW, dont l'indice d'hydroxyle est de 48 mg KOH/g.

Selon l'invention, le(s) polyester polyol(s) peut(vent) avoir une masse moléculaire moyenne en nombre (Mn) allant de 2 000 à 12 000 g/mol, de préférence de 3 000 à 11 000 g/mol, et plus préférentiellement de 4 000 à 10 000 g/mol.

A titre d'exemple de polyester diols ou triols, on peut citer les polyesters polyols d'origine naturelle dérivés de l'huile de ricin ainsi que les polyesters polyols résultant de la polycondensation :
- d'un ou plusieurs polyols aliphatiques (linéaires, ramifiés ou cycliques) ou aromatiques tels que par exemple le monoéthylène glycol, le diéthylène glycol, le 1,2-propanediol, le 1,3-propanediol, le 1,4-butanediol, le butènediol, le 1,6-hexanediol, le cyclohexane diméthanol, le tricyclodécane diméthanol, le néopentyl glycol, le cyclohexane diméthanol, le glycérol, le triméthylolpropane, le 1,2,6-hexanetriol, le sucrose, le glucose, le sorbitol, le pentaérythritol, le mannitol, la N-méthyldiéthanolamine, la triéthanolamine, un alcool gras dimère, un alcool gras trimère et leurs mélanges, avec
- un ou plusieurs acide polycarboxylique ou son dérivé ester ou anhydride tel que l'acide 1,6-hexanedioïque (acide adipique), l'acide dodécanedioïque, l'acide azélaïque, l'acide sébacique, l'acide adipique, l'acide 1,18-octadécanedioïque, l'acide phtalique, l'acide isophtalique, l'acide téréphtalique, l'acide succinique, un acide gras dimère, un acide gras trimère et les mélanges de ces acides, un anhydride insaturé tel que par exemple l'anhydride maléique ou phtalique, ou une lactone telle que par exemple la caprolactone.

Les polyester polyols suscités peuvent être préparés de manière conventionnelle, et sont pour la plupart disponibles commercialement.

A titre d'exemple de polyesters polyols, on peut par exemple citer les produits suivants de fonctionnalité hydroxyle égale à 2 :
- les estolides polyols résultant de la polycondensation d'un ou plusieurs hydroxyacides, tel que l'acide ricinoléïque, sur un diol (on peut par exemple citer le « POLYCIN® D-2000 » de masse moléculaire moyenne en nombre (Mn) d'environ 2000 g/mol, le « POLYCIN® D-3000 » de masse moléculaire moyenne en nombre (Mn) d'environ 3000 g/mol et « POLYCIN® D-4000 » de masse moléculaire moyenne en nombre (Mn) d'environ 4 000 g/mol disponibles chez VERTELLUS).
- le « TONE® 0240 » (commercialisé par UNION CARBIDE) qui est une polycaprolactone de masse moléculaire moyenne en nombre (Mn) d'environ 2000 g/mol, et un point de fusion de 50°C environ,
- le « DYNACOLL® 7381 » (comercialisé par EVONIK) de masse moléculaire moyenne en nombre (Mn) d'environ 3500 g/mol, et ayant un point de fusion de 65°C environ,
- le « DYNACOLL® 7360 » (commercialisé par EVONIK) qui résulte de la condensation de l'acide adipique avec l'hexanediol, et a une masse moléculaire moyenne en nombre (Mn) d'environ 3500 g/mol, et un point de fusion de 55°C environ,
- le « DYNACOLL® 7330 » (commercialisé par EVONIK) de masse moléculaire moyenne en nombre (Mn) d'environ 3500 g/mol, et ayant un point de fusion de 85°C environ,
- le « DYNACOLL® 7363 » (commercialisé par EVONIK) qui résulte également de la condensation de l'acide adipique avec l'hexanediol, et a une masse moléculaire moyenne en nombre (Mn) d'environ 5500 g/mol, et un point de fusion de 57°C environ,
- le « DYNACOLL® 7250 » (commercialisé par EVONIK) : polyester polyol ayant une viscosité de 180 Pa.s à 23°C, une masse moléculaire moyenne en nombre (Mn) égale à 5 500 g/mol, et une Tg égale à -50°C,
- le « KURARAY® P-6010 » (commercialisé par KURARAY) : polyester polyol ayant une viscosité de 68 Pa.s à 23°C, une masse moléculaire moyenne en nombre (Mn) égale à 6 000 g/mol, et une Tg égale à -64°C,
- le « KURARAY® P-10010 » (commercialisé par KURARAY) : polyester polyol ayant une viscosité de 687 Pa.s à 23°C, et une masse moléculaire moyenne en nombre (Mn) égale à 10 000 g/mol,

Selon l'invention, le(s) polyène polyol(s), ainsi que leurs dérivés correspondants hydrogénés ou époxydés , peut(vent) avoir une masse moléculaire moyenne en nombre (Mn) allant de 2 000 à 12 000 g/mol, de préférence de 3 000 à 11 000 g/mol, et plus préférentiellement de 4 000 à 10 000 g/mol.

De préférence, le(s) polyène polyol(s) utilisable(s) selon l'invention est (sont) choisi(s) parmi les le(s) polyène polyol(s) utilisable(s) selon l'invention les homopolymères et copolymères de butadiène et/ou d'isoprène comportant des groupes hydroxyles terminaux, éventuellement hydrogénés ou époxydés.

Dans le cadre de l'invention, et sauf mention contraire, on entend par « groupes hydroxyles terminaux » d'un polyène polyol, les groupes hydroxyles situés aux extrémités de la chaîne principale du polyène polyol.

Les dérivés hydrogénés mentionnés ci-dessus peuvent être obtenus par hydrogénation totale ou partielle des doubles liaisons d'un polydiène comportant des groupes hydroxyles terminaux, et sont donc saturé(s) ou insaturé(s).

Les dérivés époxydés mentionnés ci-dessus peuvent être obtenus par époxydation chémiosélective des doubles liaisons de la chaîne principale d'un polyène comportant des groupes hydroxyles terminaux, et comportent donc au moins un groupe époxy dans sa chaîne principale.

A titre d'exemples de polyène polyols, on peut citer les homopolymères et copolymères de butadiène et/ou d'isoprène, saturés ou insaturés, comprenant des groupes hydroxyles terminaux, éventuellement époxydés, tels que par exemple ceux commercialisés sous la dénomination « POLY BD® ou KRASOL® » par la société CRAY VALLEY.

A titre d'exemples de polyène polyols, on peut citer :
- les homopolymère diols de butadiène, saturés ou insaturés, comprenant des groupes hydroxyles terminaux tels que ceux commercialisés sous la dénomination « POLY BD® R45HT » (Mn = 2800 g/mol) ou KRASOL® » (Mn = 2400 à 3100 g/mol) commercialisés par la société CRAY VALLEY.
- Les homopolymère diols de l'isoprène, saturés ou insaturés, comprenant des groupes hydroxyles terminaux, tels que par exemple ceux commercialisés sous la dénomination « POLY IP™ » (insaturé, Mn = 2 000 g/mol) ou « EPOL™ » (saturé, Mn = 2 600 g/mol) par la société IDEMITSU KOSAN.

Selon l'invention, le(s) polycarbonate polyol(s) peut(vent) avoir une masse moléculaire moyenne (Mn) en nombre allant de 2 000 à 12 000 g/mol, de préférence de 3 000 à 11 000 g/mol, et plus préférentiellement de 4 000 à 10 000 g/mol.

A titre d'exemple de polycarbonate diols, on peut citer :
- le « CONVERGE® POLYOL 212-20 » commercialisés par la société NOVOMER de masse moléculaire en nombre (Mn) égale à 2 000 g/mol dont l'indice hydroxyle est respectivement de 56 mg KOH/g,
- les « POLYOL C-2090 et C-3090 » commercialisés par KURARAY de masse moléculaire en nombre (Mn) respectivement de 2000 et 3 000 g/mol et avec un indice hydroxyle de 56 et 37 mg KOH/g.

L'indice hydroxyle représente ici le nombre de fonctions hydroxyles par gramme de polyol et est exprimé dans le texte de la présente demande sous la forme du nombre équivalent de milligrammes de potasse (KOH) utilisés dans le dosage des fonctions hydroxyles.

Selon l'invention, les polymères à terminaisons -OH peuvent être obtenus par réaction de polyaddition entre un ou plusieurs polyol(s), et un ou plusieurs polyisocyanate(s), dans des quantités de polyisocyanate(s) et de polyol(s) conduisant à un rapport molaire NCO/OH strictement supérieur à 1. La réaction peut être réalisée en présence d'un catalyseur. Les polyols et polyisocyanates utilisables peuvent être ceux typiquement utilisés pour la préparation de polyuréthanes à terminaisons -NCO, et de préférence ceux décrits dans la présente demande.

De préférence, les polyols sont des polyéther polyols.

Selon un mode de réalisation préféré, l'étape E1) est mise en œuvre en présence d'un diol ayant une masse moléculaire moyenne en nombre (Mn) supérieure ou égale à 4 000 g/mol, ou en présence d'un mélange de polyols comprenant un ou plusieurs diol(s) dont la masse moléculaire moyenne en nombre (Mn) est supérieure ou égale à 4 000 g/mol. De façon encore plus préférée, tous les diols utilisés ont nécessairement une masse moléculaire moyenne en nombre (Mn) supérieure ou égale à 4 000 g/mol.

Selon un mode de réalisation préféré, l'étape E1) est mise en œuvre :
- avec un unique diol de masse moléculaire moyenne en nombre (Mn) supérieure ou égale à 4 000 g/mol ; ou
- avec un mélange d'un diol de masse moléculaire moyenne en nombre (Mn) supérieure ou égale à 4 000 g/mol, et d'un triol ayant avantageusement une masse moléculaire moyenne en nombre (Mn) supérieure ou égale à 2 000 g/mol.

### Polyisocyanate(s)

Le(s) polyisocyanate(s) utilisable(s) selon l'invention dans l'étape E1) peuvent être ajoutés séquentiellement ou mis à réagir sous la forme de mélange.

Selon un mode de réalisation, le(s) polyisocyanate(s) utilisable(s) sont des diisocyanate(s), de préférence choisi dans le groupe constitué de l'isophorone diisocyanate (IPDI), de l'hexaméthylène diisocyanate (HDI), de l'heptane diisocyanate, de l'octane diisocyanate, du nonane diisocyanate, du décane diisocyanate, de l'undécane diisocyanate, du dodécane diisocyanate, du 4,4'-méthylènebis(cyclohexylisocyanate) (4,4'-HMDI), du norbornane diisocyanate, du norbornène diisocyanate, du 1,4-cyclohexane diisocyanate (CHDI), du méthylcyclohexane diisocyanate, de l'éthylcyclohexane diisocyanate, du propylcyclohexane diisocyanate, du méthyldiéthylcyclohexane diisocyanate, du cyclohexane diméthylène diisocyanate, du 1,5-diisocyanato-2-méthylpentane (MPDI), du 1,6-diisocyanato-2,4,4-triméthylhexane, du 1,6-diisocyanato-2,2,4-triméthylhexane (TMDI), du 4-isocyanatométhyl-1,8-octane diisocyanate (TIN), du (2,5)-bis(isocyanatométhyl)bicyclo[2.2.1]heptane (2,5-NBDI), du (2,6)-bis(isocyanatométhyl)bicyclo[2.2.1]heptane (2,6-NBDI), du 1,3-bis(isocyanatomethyl)cyclohexane (1,3-H6-XDI), du 1,4-bis(isocyanatomethyl)-cyclohexane (1,4-H6-XDI), du xylylène-diisocyanate (XDI) (en particulier le m-xylylène diisocyanate (m-XDI)), du toluène diisocyanate (en particulier le 2,4-toluène diisocyanate (2,4-TDI) et/ou le 2,6-toluène diisocyanate (2,6-TDI)), du diphénylméthane diisocyanate (en particulier le 4,4'-diphénylméthane diisocyanate (4,4'-MDI) et/ou le 2,4'-diphénylméthane diisocyanate (2,4'-MDI)), du tétraméthylxylylène diisocyanate (TMXDI) (en particulier le tétraméthyl (méta)xylylène diisocyanate), d'un allophanate de HDI ayant par exemple la formule (Y) suivante : 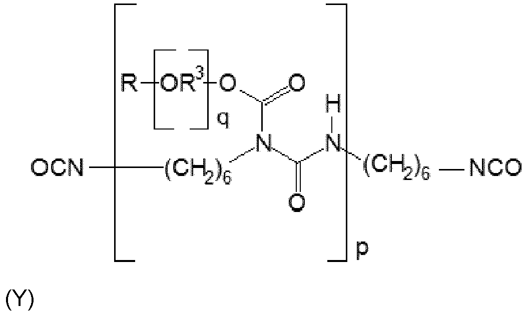
dans laquelle p est un nombre entier allant de 1 à 2, q est un nombre entier allant de 0 à 9, et de préférence 2 à 5, R représente une chaine hydrocarbonée, saturée ou insaturée, cyclique ou acyclique, linéaire ou ramifiée, comprenant de 1 à 20 atomes de carbone, de préférence de 1 à 12 atomes de carbones, 6 à 14 atomes de carbone, R³ représente un groupe divalent alkylène, linéaire ou ramifié, ayant de 2 à 4 atomes de carbones, et de préférence un groupe divalent propylène ;
et de leurs mélanges.

De préférence, l'allophanate de formule (Y) susmentionnée est tel que p, q, R et R³ sont choisis tel que le dérivé d'allophanate de HDI ci-dessus comprend une teneur en groupe isocyanate NCO allant de 12 à 14% en poids par rapport au poids dudit dérivé.

Les polyisocyanates utilisables pour préparer le polyuréthane utilisé selon l'invention sont largement disponibles dans le commerce. A titre d'exemple, on peut citer le « SCURANATE® TX » commercialisé par la société VENCOREX, correspondant à un 2,4-TDI de pureté de l'ordre de 95 %, le « SCURANATE® T100 » commercialisé par la société VENCOREX, correspondant à un 2,4-TDI de pureté supérieure à 99% en poids, le « DESMODUR® I » commercialisé par la société COVESTRO, correspondant à un IPDI, le « TAKENATE ™ 500 » commercialisé par MITSUI CHEMICALS correspondant à un m-XDI, , le «TAKENATE ™ 600 » commercialisé par MITSUI CHEMICALS correspondant à un m-H6XDI, le « VESTANAT® H12MDI » commercialisé par EVONIK correspondant à un H12MDI, ou encore ceux de la série des « TOLONATE® » commercialisés par la société VENCOREX, tel que le « TOLONATE® X FLO 100 » correspondant à un dérivé d'allophanate de HDI de formule (Y).

Selon un mode de réalisation préféré, le(s) polyisocyanate(s) de l'étape E1) est(sont) choisi(s) dans le groupe constitué du toluène diisocyanate (en particulier l'isomère 2,4 TDI, l'isomère 2,6-TDI ou leurs mélanges), du méta-xylylène diisocyanate (m-XDI), de l'isophorone diisocyanate, des allophanates de HDI, et de leurs mélanges.

### Conditions réactionnelles

La réaction entre le(s)dit(s) polyisocyanate(s) et le(s)dit(s) polyol(s) peut s'effectuer à une température de réaction T1 inférieure à 95°C et de préférence allant de 65°C à 80°C.

La réaction de polyaddition de l'étape E1) peut être mise en œuvre en présence ou non d'au moins un catalyseur de réaction.

Le(s) catalyseur(s) de réaction utilisable(s) au cours de la réaction de polyaddition de l'étape E1) peu(ven)t être tout catalyseur connu de l'homme du métier pour catalyser la formation de polyuréthane par réaction d'au moins un polyisocyanate avec au moins un polyol. Une quantité allant jusqu'à 0,3% en poids de catalyseur(s) par rapport au poids du milieu réactionnel de l'étape E1) peut être utilisée. En particulier, on préfère utiliser de 0,02% à 0,2% en poids de catalyseur(s) par rapport au poids total du milieu réactionnel de l'étape E1).

Le polyuréthane obtenu à l'issue de l'étape E1) susmentionnée peut avoir la formule (III) suivante : 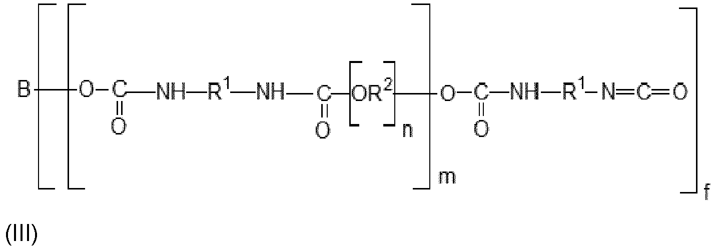 dans laquelle :
- B représente l'une des deux formules ci-dessous : 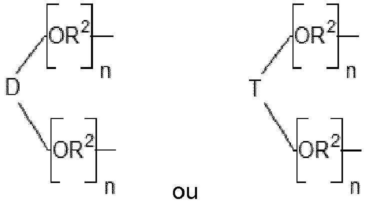
- D et T représentent un radical hydrocarboné comprenant de 2 à 66 atomes de carbone, linéaire ou ramifié, aliphatique ou cyclique, saturé ou insaturé, comprenant éventuellement un ou plusieurs hétéroatomes,
- R¹ représente un groupe divalent issu du(des) polyisocyanate(s),
- R² représente un groupe divalent issu du(des) polyol(s) ;
- n est un nombre entier non nul tel que la masse molaire moyenne en nombre (Mn) du (des) bloc(s) polyol(s) de formule -[OR²]ₙ- va de 2 000 à 12 000 g/mol, de préférence de 3 000 à 11 000 g/mol, et plus préférentiellement de 4 000 à 10 000 g/mol ;
- f représente la fonctionnalité moyenne du polyuréthane -NCO terminé laquelle est un nombre entier ou non entier pouvant allant de 2,0 à 2,2 ;
- f, n et m sont des nombres entiers tels que le pourcentage NCO du polyuréthane va de 0,4% à 3% et préférentiellement de 0,6% à 1,7 % par rapport au poids total dudit polyuréthane.

En particulier, R¹ représente un groupe divalent choisi parmi l'un des groupes divalents aliphatiques ou aromatiques suivants :
- le groupe divalent dérivé de l'isophorone diisocyanate (IPDI) : 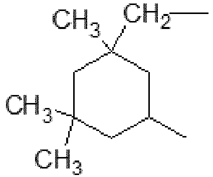
- le groupe divalent dérivé du 2,4-toluène diisocyanate (2,4-TDI) : 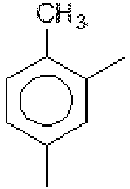
- le groupe divalent dérivé du m-xylylène diisocyanate (m-XDI) : 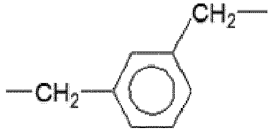
- le groupe divalent dérivé des 4,4'-diisocyanate de diphényl méthane (4,4'-MDI) et 2,4'-diisocyanate de diphénylméthane (2,4'-MDI) : 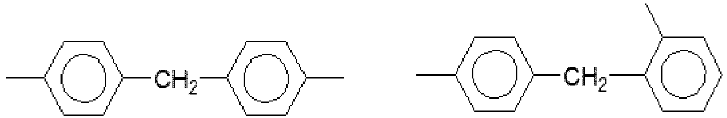
- le groupe divalent dérivé d'un allophanate d'hexaméthylène diisocyanate (HDI) de formule suivante : 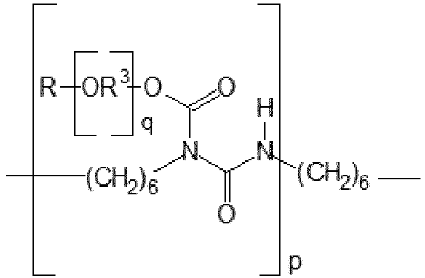
dans laquelle :
- p est un nombre entier allant de 1 à 2 ;
- q est un nombre entier allant de 2 à 5 ;
- R représente une chaine hydrocarbonée, saturée ou insaturée, cyclique ou aliphatique, linéaire ou ramifiée, comprenant de 6 à 14 atomes de carbone ;
- R³ représente un groupe divalent propylène ;
- p, q, R et R³ sont choisis tel que le dérivé d'allophanate de HDI correspondant de formule (I) comprend une teneur en groupe isocyanate NCO allant de 12% à 14% en poids.

Le polyuréthane obtenu à l'étape E1) a de préférence une viscosité allant de 10 000 à 100 000 mPa.s (millipascal seconde) à 23°C, et plus préférentiellement une viscosité inférieure à 50 000 mPa.s.

Selon un mode de réalisation préféré, le polyuréthane comprenant au moins deux fonctions terminales NCO est obtenu par réaction de polyaddition E1):
i) d'au moins un diisocyanate choisi dans le groupe constitué du toluène diisocyanate, du méta-xylylène diisocyanate, de l'isophorone diisocyanate, des allophanates de HDI, et de leurs mélanges ;
ii) avec au moins un polyéther diol ayant une masse moléculaire moyenne en nombre (Mn) supérieure ou égale à 4 000 g/mol, ou avec un mélange de polyéther diol ayant une masse moléculaire moyenne en nombre (Mn) supérieure ou égale à 4 000 g/mol avec un polyéther triol ayant avantageusement une masse moléculaire moyenne en nombre (Mn) supérieure ou égale à 2 000 g/mol.

### Etape E2)

La réaction de l'étape E2) peut être mise en œuvre à une température de réaction T2 inférieure 95°C et de préférence allant de 65°C à 80°C, de préférence dans des conditions anhydres.

Les esters hydroxylés des acides (méth)acrylique de formule (II) susmentionnée, de préférence de formules (II-1) ou (II-2) ou (II-3) susmentionnées, peuvent être mis en œuvre soit purs, soit sous la forme d'un mélange de différents esters hydroxylés de l'acide (méth)acrylique ayant un indice hydroxyle moyen dudit mélange allant de 56 à 483 mg KOH/g dudit mélange.

Les amides hydroxylés des acides (méth)acrylique de formule (II') susmentionnée, de préférence de formules (II'-1) ou (II'-2) ou (II'-3), peuvent être mis en œuvre soit purs, soit sous la forme d'un mélange de différentes amides hydroxylées de l'acide (méth)acrylique ayant un indice hydroxyle moyen dudit mélange allant de 56 à 487 mg KOH/g dudit mélange.

L'étape E2) est de préférence réalisée avec au moins un ester hydroxylé de l'acide acrylique ou méthacrylique de formule (II) susmentionnée, de préférence de formules (II-1) ou (II-2) ou (II-3) susmentionnées, et en particulier de formule (II-1-1), (II-1-2), (II-1-3) ou (II-1-4) susmentionnées, avantageusement de formule (II-1-1) ou (II-1-2) susmentionnées.

Le(s) catalyseur(s) de réaction utilisable(s) pour les étapes E1) et E2) peu(ven)t être tout catalyseur connu par l'homme du métier pour catalyser la formation de polyuréthane par réaction d'au moins un diisocyanate, d'au moins un polyol et d'au moins un hydroxyalkyl (méth)acrylate ou une hydroxyalkyl (méth)acrylamide.

De préférence, on utilise un ou plusieurs catalyseurs choisis parmi les catalyseurs ne présentant pas ou peu de risque de toxicité. En, particulier, le ou les catalyseurs de réaction sont choisis dans le groupe constitué:
- des dérivés organométalliques du bismuth, tel que le néodécanoate de bismuth vendu sous la dénomination « BORCHIKAT®315 » par la société OM Group, le carboxylate de bismuth vendu sous la dénomination « K-KATO XC B221 » par la société KING INDUSTRIES,
- des dérivés organométalliques de l'étain autres que le dibutyl dilaurate d'étain, tel que par exemple le dioctyl dilaurate d'étain (DOTL) tel que vendu sous la dénomination « TIB® KAT 217 » par la société « TIB Chemical »,
- des dérivés organométalliques du zinc, tel que le carboxylate de zinc vendu sous la dénomination « BORCHI KAT®22 » par la société OM Group,
- des dérivés organométalliques du titane, tel que le tétrabutylate de titane Ti(OCH₂CH₂CH₂CH₃)₄, l'éthylacétoacétate de titane vendu sous la dénomination « TYZOR® PITA » par la société DUPONT,
- des dérivés organométalliques du zirconium, tel que le chélate de zirconium vendu sous la dénomination « K-KAT® A209 », l'acétylacétonate de zirconium (Zr(acac)₄), et le tétraéthanolate de zirconium Zr(OCH₂CH₃)₄, et
- de leurs mélanges.

Une quantité allant jusqu'à 0,3% en poids de catalyseur(s) par rapport au poids total du milieu réactionnel de l'étape E2) peut être utilisée. En particulier, on préfère utiliser de 0,02% à 0,3% en poids de catalyseur(s) par rapport au poids total du milieu réactionnel de l'étape E2).

Selon un mode de réalisation préféré, le polyuréthane (a) susmentionné est obtenu par un procédé comprenant les étapes suivantes :
- E1) la préparation d'un polyuréthane comprenant au moins deux fonctions terminales NCO par réaction de polyaddition :
   i) d'au moins un diisocyanate choisi dans le groupe constitué du toluène diisocyanate, du méta-xylylène diisocyanate, de l'isophorone diisocyanate, des allophanates de HDI, et de leurs mélanges ;
   ii) avec au moins un polyéther diol ayant une masse moléculaire moyenne en nombre (Mn) supérieure ou égale à 4 000 g/mol, ou avec un mélange de polyéther diol ayant une masse moléculaire moyenne en nombre (Mn) supérieure ou égale à 4 000 g/mol avec un polyéther triol ayant avantageusement une masse moléculaire moyenne en nombre (Mn) supérieure ou égale à 2 000 g/mol ;
- E2) la réaction du produit formé à l'issue de l'étape E1) avec au moins un ester hydroxylé de l'acide acrylique de formule (II-1-1), dans des quantités telles que le rapport molaire OH/NCO (noté r2) est inférieur ou égal à 1,00.

### Résine tackifiante (b)

La (ou les) résine(s) tackifiante(s) utilisable(s) selon l'invention peut(vent) posséder une température de ramollissement allant de 70 à 150°C, de préférence allant de 75 à 130°C.

La température (ou point) de ramollissement de la résine peut être déterminée conformément au test normalisé ASTM E 28- 18 dont le principe est le suivant : un anneau en laiton de diamètre environ 2 cm est rempli de la résine à tester à l'état fondu. Après refroidissement à température ambiante, l'anneau et la résine solide sont placés horizontalement dans un bain de glycérine thermostaté dont la température peut varier de 5°C par minute. Une bille d'acier de diamètre environ 9,5 mm est centrée sur le disque de résine solide. La température de ramollissement est, durant la phase de montée en température du bain à raison de 5°C par minute, la température à laquelle le disque de résine flue d'une hauteur de 25,4 mm sous le poids de la bille.

La composition adhésive peut comprendre de 33% à 60%, préférentiellement de 35% à 55% en poids de résine(s) tackifiante(s) (b) par rapport au poids total de la composition.

### Résine tackifiante (b1)

La résine tackifiante peut être une résine (b1) choisie parmi les résines terpènes-phénoliques.

Les résines terpènes-phénoliques incluent les résines comprenant un résidu terpène et un résidu phénol.

Les résines terpènes phénoliques couvrent notamment :
- les copolymères de terpène et de composé phénol (résines copolymère terpène-phénol), et
- un terpène, ses homopolymères ou copolymères, modifié(s) par un phénol (résines terpènes modifiées phénol).

De préférence, les résines terpènes-phénoliques sont des résines terpènes modifiées phénol obtenues par polymérisation d'hydrocarbures terpéniques (tel que par exemple le mono-terpène) en présence d'au moins un catalyseur de Friedel-Crafts, suivie d'une réaction avec au moins un phénol.

La (ou les) résine(s) tackifiante(s) (b1) peu(ven)t présenter une température de ramollissement allant de 100 à 125°C, de préférence de 110 à 125°C, et plus préférentiellement de 115 à 120°C.

La (ou les) résine(s) tackifiante(s) (b1) peut(vent) présenter une masse molaire moyenne en nombre Mn allant de 470 à 700 Da, de préférence de 500 à 650 Da.

La (ou les) résine(s) tackifiante(s) (b1) peut(vent) avoir un indice d'hydroxyle allant de 40 à 160 mg KOH/g, de préférence allant de 50 à 155 mg KOH/g, et plus préférentiellement de 90 à 150 mg KOH/g.

Parmi les résines terpènes-phénoliques (b1), on peut par exemple citer la « DERTOPHENE® H150 » disponible auprès de société DRT ayant une masse molaire égale à environ 630 Da, ayant une température de ramollissement de 118°C et un indice d'hydroxyle allant de 135 à 150 mg KOH/g.

### Résine tackifiante (b2)

La(les) résine(s) tackifiante(s) (b2) sont des résines issues de la polymérisation d'alpha-méthyl styrène, suivie éventuellement d'une réaction avec au moins un phénol.

La (ou les) résine(s) tackifiante(s) (b2) peut(vent) avoir une température de ramollissement allant de 75 à 120°C, plus préférentiellement de 90 à 110°C.

La (ou les) résine(s) tackifiante(s) (b2) peut(vent) avoir une masse molaire moyenne en nombre allant de 650 à 1800 Da, de préférence allant de 750 à 1050 Da, plus préférentiellement de 950 à 1020 Da.

La (ou les) résine(s) tackifiante(s) (b2) peut(vent) avoir un indice d'hydroxyle allant de 4 à 50 mg KOH/g.

La (ou les) résine(s) tackifiante(s) (b2) peut avoir un indice de polymolécularité allant de 1,2 à 1,8, de préférence allant de 1,4 à 1,7.

Parmi les résines terpènes-phénoliques (b2), on peut par exemple citer la « SYLVARES® 520 AMS » disponible auprès de la société KRATON (ayant une masse moléculaire en nombre (Mn) de 940 Da, une température de ramollissement de 75°C et un indice d'hydroxyle de 39 mg KOH/g environ) ; la « SYLVARES® 525 AMS » également disponible auprès de la société KRATON (ayant une masse moléculaire en nombre (Mn) d'environ 1770 Da, une température de ramollissement de 94°C, et un indice d'hydroxyle de 4 mg KOH/g environ) ; et la « SYLVARES® 540 AMS » disponible auprès de la société KRATON (ayant une masse molaire en nombre (Mn) d'environ 880 Da, une température de ramollissement de 76°C et un indice d'hydroxyle de 56 mg KOH/g environ).

### Résine tackifiante (b3)

Les résines tackifiantes (b3) sont des résines polymériques (éventuellement au moins partiellement hydrogénées) issues de coupes aromatiques principalement en C9.

La(les) résine(s) tackifiante(s) (b3) est (sont) notamment obtenue(s) par polymérisation de mélanges d'hydrocarbures aromatiques ayant principalement 9 atomes de carbone issus de coupes pétrolières.

La (ou les) résine(s) tackifiante(s) (b3) peut(vent) avoir une température de ramollissement allant de 70 à 110°C, plus préférentiellement de 80 à 110°C.

La (ou les) résine(s) tackifiante(s) (b3) peut(vent) avoir ne masse molaire moyenne en nombre allant de 400 à 1050 Da, de préférence allant de 450 à 850 Da, plus préférentiellement de 500 à 650 Da.

La (ou les) résine(s) tackifiante(s) (b3) peut(vent) avoir un indice de polymolécularité allant de 1,2 à 1,6, de préférence allant de 1,3 à 1,5.

Parmi les résines terpènes-phénoliques (b3), on peut par exemple citer la « PICCO® AR-85 » disponible auprès de la société EASTMAN (ayant une masse moléculaire en nombre (Mn) de 520 Da, un point de ramollissement de 85°C et un indice d'hydroxyle nul) ; et la « PICCO® AR-100 » également disponible auprès de la société EASTMAN (ayant une masse moléculaire en nombre (Mn) de 600 Da, un point de ramollissement de 100°C et un indice d'hydroxyle nul).

De préférence, la composition ne comprend pas de colophanes d'origine naturelle ou modifiées, telles que par exemple la colophane extraite de la gomme de pins, la colophane de bois extraite des racines de l'arbre, et leurs dérivés hydrogénés, dimérisés, polymérisés ou esterifiés par des monoalcools ou polyols (tel que par exemple le glycérol).

De façon encore plus préférée, la composition ne comprend pas d'autres résines tackifiantes que les résines tackifiantes b1, b2 et b3 susmentionnées.

De préférence, la composition comprend au moins une résine tackifiante (b1).

### Inhibiteur de polymérisation (c)

La composition selon l'invention peut comprendre au moins un inhibiteur de polymérisation (c) dans une teneur massique inférieure ou égale à 3% en poids par rapport au poids total de la composition, de préférence dans une teneur massique allant de 0,005% à 2% en poids par rapport au poids total de la composition.

L'inhibiteur de polymérisation (c) est typiquement un antioxydant qui permet notamment de protéger la composition d'une dégradation résultant d'une réaction avec de l'oxygène qui est susceptible de se former par action de la chaleur, de la lumière ou de catalyseurs résiduels sur certaines matières premières telles que les résines tackifiantes. Les inhibiteurs de polymérisation sont introduits pour stabiliser la composition et éviter une polymérisation non-contrôlée des fonctions (méth)acrylates lors de la fabrication, dans les conditionnements lors du stockage et pour réguler la polymérisation lors de l'utilisation de la composition.

Les inhibiteurs de polymérisation radicalaire (c) sont de préférence choisis dans le groupe constitué des composés phénoliques primaires stériquement encombrés (en particulier substitués par des groupes méthyle et/ou ter-butyle), des phosphites, des hydroquinines, des phénols, des amines, des phénolamines, des phénothiazines, et de leurs mélanges.

Parmi les composés phénoliques primaires stériquement encombrés, on peut par exemple citer l'« IRGANOX® 1076 » de BASF (octadécyl-3-(3,5-di-terbutyl-4-hydroxyphényl)-propionate), l'« IRGANOX® 1010 » de BASF (pentaerythritol tétrakis (3-(3,5-di-tert-butyl-4-hydroxyphényl)propionate), l'« IRGANOX® 245 » de BASF (éthylène bis(oxyéthylène) bis-(3-(5-tert-butyl-4-hydroxy-m-tolyl)propionate).

Parmi les phosphites, on peut par exemple citer l'« IRGAFOS® 168 » commercialisé par BASF (tris (2,4-di-terbutylphényl) phosphite).

### Photo-amorceur radicalaire(s) (d)

La composition selon l'invention peut être polymérisée ou réticulée sous rayonnement ultra-violet (UV) ou sous rayonnement d'un faisceau d'électrons (« e-beam », « electron-beam »).

Selon un mode de réalisation, lorsque la composition est polymérisée ou réticulée sous rayonnement UV, elle comprend au moins un photo-amorceur radicalaire (d).

Selon un autre mode de réalisation, les compositions selon l'invention ne comprennent aucun photo-amorceur radicalaire lorsqu'elles sont réticulées avec une énergie de faisceau d'électrons (« e-beam »).

La composition selon l'invention peut comprendre de 0% à 5% en poids, de préférence de 0% à 3% en poids, encore plus préférentiellement de 0,1% à 2% en poids, et encore plus avantageusement de 0,5% à 1,5% en poids de photo-amorceur(s) radicalaire(s) par rapport au poids total de la composition.

Le photo-amorceur radicalaire (d) peut être tout photo-amorceur radicalaire connu de l'homme du métier. Sous l'action d'un rayonnement UV-visible, le photo-amorceur radicalaire génère des radicaux qui vont être responsables de l'amorçage de la réaction de photo-polymérisation, et permet notamment d'augmenter l'efficacité de la réaction de photo-polymérisation. Celui-ci est bien entendu choisi en fonction de la source lumineuse utilisée, suivant sa capacité à absorber efficacement le rayonnement sélectionné. On pourra par exemple choisir le photo-amorceur radicalaire adéquat à partir de son spectre d'absorption UV visible. Avantageusement, le photo-amorceur radicalaire est adapté pour travailler avec des sources d'irradiation émettant dans la zone proche du visible. Avantageusement, la source du rayonnement UV ou visible peut être une LED, ou une lampe à décharge. Par exemple, il peut s'agir d'une lampe Hg/Xe. La lumière naturelle peut également être utilisée.

De préférence, ledit au moins un photo-amorceur radicalaire (d) est choisi dans le groupe constitué :
- des photo-amorceurs radicalaires de type I choisi parmi :
   - la famille des acétophénones et des alkoxyacétophénones, tel que par exemple la 2,2-diméthoxy-2-phényleacétophénone et la 2-diéthyle-2-phényleacétophénone ;
   - la famille des hydroxyacétophénones, tel que par exemple la 2,2-diméthyle-2-hydroxyacétophénone, la 1-hydroxycyclohéxylephényle cétone, la 2-hydroxy-4'-(2-hydroxyéthoxy)-2-méthyle-propriophénone et la 2-hydroxy-4'-(2-hydroxypropoxy)-2-méthyle-propriophénone ;
   - la famille des alkylaminoacétophénones, tel que par exemple la 2-méthyle-4'-(méthylthio)-2-morpholino-propriophénone, la 2-benzyle-2-(diméthylamino)-4-morpholinobutyrophénone et la 2-(4-(méthylbenzyle)-2-(diméthylamino)-4-morpholino-butyrophénone ;
   - la famille des éthers de benzoïne, tel que par exemple le benzyle, le méthyle éther de benzoïne et l'isopropyle éther de benzoïne ;
   - la famille des oxydes de phosphines, tel que par exemple l'oxyde de diphényle-(2,4,6-triméthylbenzoyle)phosphine (TPO), l'oxyde d'éthyle-(2,4,6-triméthylbenzoyle)phénylphosphine (TPO-L) et l'oxyde de bis-(2,6-diméthoxybenzoyle)-2,4,4-triméthylphényle phosphine (BAPO) ;
- des photo-amorceurs radicalaires de type II choisi parmi :
   - la famille des benzophénones, tel que par exemple la 4-phénylbenzophénone, la 4-(4'-méthylphénylthio)benzophénone, la 1-[4[(4-benzoylphényle)thio]phényle]-2-méthyle-2-[(4-méthylphényle)sulfonyle]-1-propanone ;
   - la famille des thioxanthones, tel que par exemple l'isopropylthioxanthone (ITX), la 2,4-diéthylthioxanthone, la 2,4-diméthylthioxantone, la 2-chlorothioxanthone et la 1- chloro-4-isopropylthioxanthone ;
   - la famille des quinones, tel que par exemple les antraquinones dont la 2-éthylantraquinone et les camphroquinones ;
   - la famille des esters de benzoyle formate, tel que par exemple la méthylbenzoylformate ;
   - la famille des metallocènes, tels que par exemple le ferrocène, le bis(eta 5-2,4-cyclopentadiène-1-yle)-bis(2,6-difluoro)-3-(1H-pyrrole-1-yle)-phényle) de titane et l'hexafluorophosphate de (cumène)cyclopentadiènyle de fer ;
   - la famille des cétones de dibenzylidène, tel que par exemple la p-diméthylaminocétone ;
   - la famille des coumarines, tel que par exemple la coumarine de 5- méthoxy et 7-méthoxy, la coumarine de 7-diéthylamino et la coumarine de N-phényleglycine ;
- des photo-amorceurs radicalaires de la famille des colorants tels que par exemple les triazines, les fluorones, les cyanines, les safranines, la 4,5,6,7-tétrachloro-3',6'-dihydroxy-2',4',5',7'-tétraiodo-3H-spiro[isobenzofuran-1,9'-xanthén]-3-one, les pyrylium et thiopyrylium, les thiazines, les flavines, les pyronines, les oxazines, les rhodamines;
- et de leurs mélanges.

De façon encore plus préférée, le photo-amorceur radicalaire (d) est choisi parmi les photo-amorceurs radicalaires de type I susmentionnés.

A titre d'exemple, lorsque la source du rayonnement UV ou visible est une LED, le photo-amorceur radicalaire peut être choisi parmi le 2,4,6-triméthylbenzoyldiphenylphosphine ou TPO disponible par exemple chez LAMBSON sous la référence commerciale SPEEDCURE® TPO (CAS : 75980-60-8), le éthyl (2,4,6-triméthylbenzoyl) phényl phosphinate ou TPO-L disponible par exemple chez LAMBSON sous la référence commerciale SPEEDCURE® TPO-L (CAS : 84434-11-7), le Phénylbis(2,4,6-triméthylbenzoyl)phosphine oxide ou BAPO (CAS : 162881-26-7) disponible par exemple chez BASF sous la référence commerciale IRGACURE® 819, le 2-Benzyl-2-diméthylamino-1-(4-morpholinophényl)-1-butanone (CAS: 119313-12-1) disponible par exemple chez BASF sous la référence commerciale IRGACURE® 369, le 2-methyl-1-[4-(methylthio)phényl]-2-(4-morpholinyl)-1-propanone (CAS: 71868-10-5) disponible par exemple chez BASF sous la référence commerciale IRGACURE® 907, le 1-Hydroxy-cyclohexyl-phenyl-ketone (CAS: 947-19-3) disponible par exemple chez BASF sous la référence commerciale IRGACURE® 184, le 2-Isopropylthioxanthone ou ITX (CAS : 5495-84-1) disponible par exemple sous la référence SPEEDCURE® 2-ITX, ou leurs mélanges.

Les photo-amorceurs radicalaires (d) selon l'invention sont préférentiellement liquides.

### Additifs(s) (e)

La composition selon l'invention peut aussi inclure un ou plusieurs additifs choisi(s) (e) de manière appropriée pour ne pas détériorer les propriétés de l'adhésif réticulé. On peut par exemple citer les promoteurs d'adhésion, les agents rhéologiques, les agents thixotropes, les plastifiants, les agents opacifiants, les pigments, les colorants, les charges, et leurs mélanges. Ces additifs peuvent être choisis parmi ceux habituellement utilisés dans des compositions adhésives.

De préférence, la composition selon l'invention ne comprend pas de plastifiant.

### Composition adhésive

De préférence, la composition selon l'invention ne comprend pas de solvant organique de point d'ébullition inférieur à 250°C à pression atmosphérique, tel que de l'acétate d'éthyle, le xylène, le toluène, la N-méthyl-2-pyrrolidone (NMP).

De préférence, dans la composition adhésive, le ratio massique polyuréthane(s) (a) : résine(s) tackifiante(s) (b) va de 45 : 55 à 55 : 45, préférentiellement il est égal à 50 : 50.

Selon un mode de réalisation, la composition selon l'invention comprend :
(a) de 35 à 65 % en poids de polyuréthane(s) tel(s) que défini précédemment,
(b) de 33 à 60 % en poids de résine(s) tackifiante(s) (b) telle(s) que définie(s) précédemment,
(c) au moins un inhibiteur de polymérisation,
(d) de 0% à 3 % en poids de photo-amorceur radicalaire(s),
(e) de 0% à 20 % en poids d'au moins un additif choisi parmi les promoteurs d'adhésion, les agents rhéologiques, les agents thixotropes, les plastifiants, les agents opacifiants, les pigments, les colorants, les colorants et les charges.

La composition selon l'invention peut avoir une viscosité allant de 1000 à 50 000 mPa.s à 80°C, et de préférence une viscosité allant de 4000 à 25 000 mPa.s à 80°C.

La composition selon l'invention peut avoir une viscosité allant de 50 mPa.s à 500 000 mPa.s à une température variant de 40°C à 160°C, préférablement de 600 mPa.s à 100 000 mPa.s à une température variant de 60°C à 100°C, préférentiellement de 1 200 mPa.s à 50 000 mPa.s à une température variant de 60°C à 100°C, avantageusement de 1 200 mPa.s à 10 000 mPa.s à une température allant de 60°C à 100°C, par exemple de 1 200 mPa.s à 5 000 mPa.s à une température allant de 60°C à 100°C.

Cette viscosité peut être mesurée à 80°C à l'aide d'un viscosimètre Brookfield RVT couplé avec un module chauffant de type Thermosel de la marque Brookfield, avec un mobile numéro 27 à une vitesse de rotation de 20 tours par minute.

La composition selon l'invention a avantageusement :
- une teneur en monomères polyisocyanates résiduels (issus de l'étape E1), et en particulier en monomères diisocyanates, inférieure ou égale à 0,1% en poids par rapport au poids total de ladite composition ; et/ou
- une teneur en ester hydroxylé de l'acide (méth)acrylique résiduel ou en amide hydroxylée de l'acide (méth)acrylique (issu de l'étape E2) inférieure ou égale à 0,2% en poids, préférentiellement inférieure ou égale à 0,02% en poids par rapport au poids total de ladite composition;
les pourcentages en poids étant par rapport au poids total de ladite composition.

Le principe de la méthode d'analyse pour la détermination de la concentration en monomères diisocyanates libres repose sur la réaction spécifique du groupe isocyanate NCO avec une amine (1-(2-méthoxyphényl)pipérazine ou PPZ) pour former des dérivés stables d'urée. Ces dérivés sont obtenus lors de la préparation de l'échantillon d'adhésif par dilution/solubilisation de cet échantillon à l'aide d'une solution d'acétonitrile à 0,02 mol/L de PPZ. Les dérivés de PZZ formés à partir des isocyanates contenus dans l'échantillon à analyser sont ensuite dosés par un système de Chromatographie Liquide Haute Performance (CLHP) à phase inversée en C18 avec un gradient de phase mobile comprenant un mélange d'eau et d'acétonitrile tamponné à l'aide d'une solution aqueuse de tétrabutylammonium bisulfate à 0,2% en poids, à un pH allant de 2 à 3, muni d'un détecteur Ultra-Violet (UV) fonctionnant à 254nm. Ces composés sont identifiés et quantifiés en comparant leur temps de rétention et leur surface de pics chromatographiques avec ceux des dérivés PPZ étalons obtenus par réaction d'un monomère diisocyanate de nature et concentration connue.

La concentration en ester hydroxylé de l'acide (méth)acrylique résiduel ou en amide hydroxylée de l'acide (méth)acrylique peut être mesurée par un système de Chromatographie Liquide Haute Performance, par exemple à l'aide d'un appareil UPLC de Waters Acquity. Les échantillons peuvent être préparés par dilution de 0,2 g dans un mélange acétonitrile/eau (ou méthanol/eau) de volume 10 mL. L'échantillon préparé est ensuite dosé par UPLC à phase inversée en C18 avec un gradient de phase mobile comprenant un mélange d'acétonitrile (ou de méthanol) et de H₃PO₄ additionné d'acide orthophosphorique, à une température de colonne de 30°C. Les composés sont identifiés et quantifiés en comparant leur temps de rétention et leur surface de pics chromatographiques avec ceux des dérivés étalons obtenus par réaction d'un ester hydroxylé (ou amide hydroxylée) de l'acide (méth)acrylique de nature et concentration connue.

De préférence, la composition comprend une teneur totale en monomère(s) (méth)acrylate(s) (hormis les esters hydroxylés ou amides hydroxylées de l'acide (méth)acrylique résiduels) strictement inférieure à 0,5% en poids, préférentiellement inférieure à 0,1% en poids, et encore plus avantageusement inférieure à 0,01% en poids par rapport au poids total de la composition. Parmi les monomère(s) (méth)acrylate(s), on peut notamment citer le tétrahydrofurfuryl acrylate alcoxylé, l'isobornyl acrylate, le tétrahydrofurfuryl acrylate, le caprolactone acrylate, le 2(2-éthoxyéthoxy)éthyl acrylate, le 2-phénoxyéthyl acrylate, le tétrahydrofurfuryl méthacrylate, l'isooctyl acrylate, le 2-octyl acrylate, le 2-éthylhexyl acrylate, et leurs mélanges.

### B. Procédé de préparation de la composition

Un autre objet de l'invention porte sur un procédé de préparation d'une composition susmentionnée, comprenant :
- une étape de préparation d'un polyuréthane (a) tel que défini précédemment ;
- une étape de mélange dudit polyuréthane (a) avec les autres composés de la composition.

Selon une variante préférée selon l'invention, le procédé de préparation de la composition selon l'invention comprend:
(i) une étape de fonte de la ou les résine(s) tackifiante(s) (b), le cas échéant en mélange avec un ou plusieurs inhibiteur(s) de polymérisation (c) à une température T3,
(ii) une étape d'incorporation et de mélange, sous atmosphère inerte, du ou des polyuréthanes (a),
(iii) une étape de refroidissement dudit mélange, à une température T4 inférieure à T3, puis,
(iv) une éventuelle étape d'incorporation dans ledit mélange du ou des photo-amorceur radicalaire(s) de réticulation (d), et le cas échéant, du ou des autres additif(s) e).

L'étape (i) peut avoir lieu à une température T3 supérieure ou égale à la température de ramollissement de la résine tackifiante, et dans le cas d'un mélange de résine, à une température T3 supérieure ou égale à la plus grande des températures de ramollissement des résines utilisées. En particulier, la température T3 est inférieure à 150°C, de préférence inférieure ou égale à 130°C.

De préférence, la température T3 va de 70°C à 150°C, plus préférentiellement de 75°C à 130°C.

Dans l'étape (ii), l'ajout du ou des polyuréthane(s) (a) peut être réalisé de manière fractionnée. En effet, la quantité totale de polyuréthane(s) à introduire peut être fractionnée en autant de portions que nécessaire de manière à éviter qu'une baisse trop importante de la température du mélange liée à l'introduction d'un volume important en polyuréthane(s), ne fige le milieu réactionnel.

Le procédé peut comprendre, entre chacune des étapes précédentes (i) à (iv), une étape de déshydratation sous vide, de manière à travailler dans des conditions anhydres optimales. Chaque étape de déshydratation peut être réalisée sous une pression réduite de 10 à 50 millibars (mbar), pendant une durée allant d'une heure trente à trois heures et de préférence de deux heures à trois heures.

L'étape (iii) a généralement lieu à une température T4 inférieure à la température T3. De préférence, la température T4 va de 45°C à 90°C, plus préférentiellement de 70°C à 80°C.

### C. Utilisations

La présente invention concerne l'utilisation de la composition adhésive susmentionnée pour la préparation de support auto-adhésif.

La présente invention a également pour objet un support auto-adhésif susceptible d'être obtenu par un procédé comprenant les étapes suivantes :
(i') préchauffage à une température T5 de la composition telle que définie précédemment afin d'obtenir un liquide ayant une viscosité inférieure à 10 000 mPa.s à T5,
(ii') enduction de ladite composition sur une couche support, puis
(iii') réticulation de ladite composition par irradiation sous un faisceau UV ou sous un rayonnement d'électrons e-beam, avec un temps d'irradiation compris entre 1 seconde et 2 minutes, préférentiellement entre 1 seconde et 1 minute.

L'étape (i') peut être mise en œuvre à une température T5 allant de 70°C à 150°C, de préférence à une température T5 allant de 75°C à 130°C.

L'étape (ii') d'enduction de la couche support peut être réalisée au moyen de dispositifs d'enduction connus, comme par exemple une buse à lèvre ou de type rideau, au rouleau ou un enducteur manuel également dénommé tire-film ou filmographe. Elle met en œuvre un grammage de composition pouvant aller de 20 à 100 g/m².

Le matériau utilisable pour la couche support est par exemple du papier ou un film d'un matériau polymère à une ou plusieurs couches. A titre d'exemple, on peut citer un support de PolyEthylèneTéréphtalate (PET).

Le temps nécessaire à la réticulation de l'étape (iii') peut varier dans de larges limites, par exemple entre 1 seconde et 2 minutes.

Cette étape de réticulation UV a pour notamment pour effet la création - entre les chaînes polymériques du polyuréthane utilisé selon l'invention, et sous l'action des UV - de liaisons de type carbone-carbone qui conduisent à la formation d'un réseau polymérique tridimensionnel. La composition adhésive ainsi réticulée est un adhésif sensible à la pression qui confère à la couche support qui en est revêtue le pouvoir adhésif et le tack désirables.

Enfin, le joint de colle formé après application sur un substrat de la couche support revêtue de la composition réticulée assure avantageusement la fixation de ladite couche support dans un domaine de température allant de -60°C à +160°C.

Le support auto-adhésif selon l'invention peut également comprendre une couche anti-adhérente protectrice recouvrant la couche de PSA, ladite couche protectrice étant simplement contre-collée.

La présente invention concerne également l'utilisation du support auto-adhésif défini précédemment pour la fabrication d'étiquettes et/ou rubans auto-adhésifs.

Le grammage de composition adhésive nécessaire pour la fabrication d'étiquettes auto-adhésives peut aller de 20 à 100 g/m², de préférence autour de 50 g/m². Celui nécessaire pour la fabrication de rubans auto-adhésifs peut varier dans un domaine beaucoup plus large allant de 2 à 1000 g/m², de préférence de 15 à 250 g/m².

Dans le cadre de l'invention, par « comprise entre x et y », ou « allant de x à y », on entend un intervalle dans lequel les bornes x et y sont incluses. Par exemple, la gamme «comprise entre 0% et 25% » inclus notamment les valeurs 0% et 25%.

L'invention est à présent décrite dans les exemples de réalisation suivants qui sont donnés à titre purement illustratif, et ne sauraient être interprétés pour en limiter la portée.

### EXEMPLES

Les ingrédients suivants ont été utilisés :
- DESMODUR® T 100 : toluène diisocyanate (TDI) présentant 99,5 % en poids de fonctions NCO et comprenant 95% en poids d'isomère 2,4-TDI (disponible auprès de la société COVESTRO ;
- VORANOL® P 2000 : polypropylène glycol difonctionnel présentant un indice hydroxyle IOH allant de 250 à 270 mg KOH/g (disponible auprès de la société DOW) ;
- VORANOL® CP 3355 : polypropylène glycol trifonctionnel présentant un indice hydroxyle IOH allant de 48 mg KOH/g (disponible auprès de la société DOW) ;
- ACCLAlM® 4200 : polypropylène glycol difonctionnel présentant un indice hydroxyle IOH allant de 26,5 - 29,5 mg KOH/g (disponible auprès de la société COVESTRO) ;
- ACCLAIM® 8200 : polypropylène glycol difonctionnel présentant un indice hydroxyle IOH allant de 13 à 15 mg KOH/g (disponible auprès de la société COVESTRO) ;
- HEA : 2-hydroxyéthyl acrylate présentant une pureté de 98,5% en poids et contenant 250 ± 50 ppm de MEHQ disponible auprès de la société BASF ;
- BORCHI KAT® 315 : catalyseur à base de néodécanoate de bismuth (disponible auprès de la société Borchers) ;
- DERTOPHENE® H150 : résine tackifiante de type terpène-phénol disponible auprès de la société DRT ayant une masse molaire égale à environ 630 Da, une température de ramollissement de 118°C et un indice d'hydroxyle allant de 135 à 150 mg KOH/g ;
- SYLVALITE® RE 100 : résine tackifiante de type ester de pentaerythritol et de collophane de talloil disponible auprès de la société ARIZONA CHEMICAL ayant une masse moléculaire égale à environ 1700 Da et une température de ramollissement de 100°C ;
- SPEEDCURE® TPO-L : Ethyl (2,4,6-triméthylbenzoyl) phényl phosphinate (CAS : 84434-11-7) disponible auprès de la société LAMBSON.

### A. Préparation des polyuréthanes comprenant des fonctions (méth)acryliques T

Le(s) polyol(s) est (sont) séché(s) avant d'être mis en réaction avec le(s) polyisocyanate(s) utilisé(s) pour la synthèse du polyuréthane à terminaisons NCO. Les quantités de diisocyanate et de diol utilisés dans les exemples 1 à 4 correspondent à un ratio molaire NCO/OH, noté (r1), allant de 1,65 à 1,75 environ.
Pour chacun des polyuréthanes P comportant des fonctions terminales T des exemples 1 à 3 obtenus, le taux de NCO dans le milieu de synthèse du polyuréthane est dosé selon la norme NF T52-132. Les valeurs mesurées sont exprimées en pourcentage en poids par rapport à un échantillon de 100 g.
Pour chacun des polyuréthanes comportant des fonctions terminales T des exemples 1 à 3 obtenus, la teneur pondérale en monomère diisocyanate non réagi présent dans le milieu de synthèse du polyuréthane est mesurée par une méthode d'HPLC muni d'un détecteur UV tel que décrit précédemment (phase inversée en C18, phase mobile : solution aqueuse d'acétonitrile, tamponnée avec une solution aqueuse à 0,2% en poids de bisulfate de tétrabutylammonium à pH égal à 2,5, longueur d'onde de détection : 254nm). Les valeurs mesurées sont exprimées en pourcentage en poids et sont ensuite rapportées sur le poids total du polyuréthane à fonctions terminales (méth)acryliques T. Le taux de monomère diisocyanate résiduel dans chacun des polymères des exemples 1 à 3 est inférieur à 0,02 % en poids, et préférentiellement non détecté au seuil de 0,01 % en poids par GC ou HPLC.

### Exemple 1 : Préparation d'un polvuréthane P1

On introduit dans un réacteur 6,52 g de DESMODUR® T 100 et on chauffe à 40°C. On introduit ensuite 88,90 g de ACCLAIM® 4200 (soit r₁ = 1,68 et f = 2) en veillant à ce que la température du mélange ne dépasse pas 80°C. Lorsque la température de mélange est stabilisée, on chauffe le mélange pendant environ 1 heure à 80-85°C. La fin de la réaction est suivie en contrôlant le pourcentage massique de fonctions NCO dans le milieu, ce dernier devant être en théorie d'environ 1,28 % en poids. Lorsque la réaction est terminée, on refroidit le mélange à 70°C et on introduit, 0,12 g de MEHQ, 4,36 g de 2-hydroxyéthyl acrylate (soit r₂ = 0,81) et 0,13 g de BORCHI KAT® 315. Le mélange est maintenu à 70°C pendant 6 à 8 heures en contrôlant le pourcentage massique de fonctions NCO dans le milieu, ce dernier devant en théorie d'environ 0,24 %, et jusqu'à ce qu'il n'y ait plus de fonction OH visibles à l'Infra-Rouge (IR).
La teneur en fonctions terminales (méth)acryliques T du polyuréthane est de 0,2400 méq/g. La fonctionnalité moyenne en fonctions T de formule (I) susmentionnée dans le polyuréthane P1 est égale à 2.

### Exemple 2: Préparation d'un polvuréthane P2

On introduit dans un réacteur 6,81 g de DESMODUR® T 100 et on chauffe à 40°C. On introduit ensuite tour à tour 5,29 g de VORANOL® CP 3355, puis 82,97 g de ACCLAlM® 4200 (soit r₁ = 1,70 et f = 2,07) en veillant à ce que la température du mélange ne dépasse pas 80°C. Lorsque la température de mélange est stabilisée, on chauffe le mélange pendant environ 1 heure à 80-85°C. La fin de la réaction est suivie en contrôlant le pourcentage massique de fonctions NCO dans le milieu, ce dernier devant être en théorie d'environ 1,35 % en poids. Lorsque la réaction est terminée, on refroidit le mélange à 70°C et on introduit, 0,12 g de MEHQ, 4,70 g de 2-hydroxyéthyl acrylate (soit r₂ = 0,80) et 0,10 g de BORCHI KAT® 315. Le mélange est maintenu à 70°C pendant 6 à 8 heures en contrôlant le pourcentage massique de fonctions NCO dans le milieu, ce dernier devant en théorie d'environ 0,26 %, et jusqu'à ce qu'il n'y ait plus de fonction OH visibles à l'Infra-Rouge (IR).
La teneur en fonctions terminales (méth)acryliques T du polyuréthane est de 0,2499 méq/g. La fonctionnalité moyenne en fonctions T de formule (I) susmentionnée dans le polyuréthane P2 est 2,07.

### Exemple 3 : Préparation d'un polyuréthane P3

On introduit dans un réacteur 3,94 g de DESMODUR® T 100 et on chauffe à 40°C. On introduit ensuite tour à tour 5,59 g de VORANOL® CP 3355, puis 87,55 g de ACCLAlM® 8200 (soit r1 = 1,70 et f = 2,13) en veillant à ce que la température du mélange ne dépasse pas 80°C. Lorsque la température de mélange est stabilisée, on chauffe le mélange pendant environ 1 heure à 80-85°C. La fin de la réaction est suivie en contrôlant le pourcentage massique de fonctions NCO dans le milieu, ce dernier devant être en théorie d'environ 0,78 % en poids. Lorsque la réaction est terminée, on refroidit le mélange à 70°C et on introduit, 0,12 g de MEHQ, 2,70 g de 2-hydroxyéthyl acrylate (soit r₂ = 0,80) et 0,10 g de BORCHI KAT® 315. Le mélange est maintenu à 70°C pendant 6 à 8 heures en contrôlant le pourcentage massique de fonctions NCO dans le milieu, ce dernier devant en théorie d'environ 0,15 %, et jusqu'à ce qu'il n'y ait plus de fonction OH visibles à l'Infra-Rouge (IR).
La teneur en fonctions terminales (méth)acryliques T du polyuréthane est de 0,1462 méq/g. La fonctionnalité moyenne en fonctions T de formule (I) susmentionnée dans le polyuréthane P3 est 2,13.

### Mesure des viscosités

La viscosité des polyuréthanes P1 à P4 comprenant des fonctions terminales T est estimée en mesurant à 23°C la viscosité du mélange. Cette mesure est réalisée 24 heures après la fin de réaction (J+1) à 23°C, à l'aide d'un viscosimètre Brookfield RVT, avec une aiguille numéro 6 à une vitesse de rotation de 20 tours par minute (tr/mn). La valeur mesurée est exprimée en millipascal seconde (mPa.s) et est consignée dans le tableau 1.

| Caractérisation du polyuréthane | **P1** | **P2** | **P3** |
|---|---|---|---|
| Viscosité à 23°C (mPa.s) | 44 200 | 103 400 | 92 800 |

### B. Préparation des compositions adhésives thermofusibles sensibles à la pression

Les compositions 1A à 5A ont été préparées à partir des polyuréthane-(méth)acryliques P1 à P3 comprenant des fonctions terminales (méth)acryliques T des exemples 1 à 3 précédemment obtenus sans subir d'étape de purification.

Les exemples 1A, 3A, et 4A illustrent des compositions adhésives selon l'invention comprenant les polyuréthane-(méth)acryliques P1, P2, et P3 obtenus respectivement aux exemples 1, 2, et 3, avec la résine tackifiante DERTOPHENE® H150 de type (b1) disponible auprès de la société DRT avec une masse molaire égale à environ 630 Da, une température de ramollissement de 118°C et un indice d'hydroxyle allant de 135 à 150 mg KOH/g.

L'exemple 2A correspond à une composition comparative comprenant le polyuréthane-(méth)acryliques P1 obtenu dans l'exemple 1, mais avec un ratio massique polyuréthane P1 : résine tackifiante hors de la gamme 4 : 6 à 6 : 4.

L'exemple 5A correspond à une composition comparative comprenant le polyuréthane-(méth)acryliques P1 obtenu dans l'exemple 1, mais avec une résine tackifiante différente de celle selon l'invention.

### Protocole expérimental :

La composition 1A est préparée en introduisant tout d'abord la résine tackifiante et les antioxydants dans un réacteur en verre sous vide et chauffé à une température T3 supérieure ou égale à la température de ramollissement de la résine tackifiante et inférieure ou égale à 130°C. Puis, une fois la résine bien fondue, on coupe le vide et on introduit sous azote la moitié du polyuréthane-(méth)acrylique P1 obtenue dans l'exemple 1 précédent. Le mélange est maintenu à une température T3 sous agitation constante. Après addition, le mélange est laissé sous agitation sous vide durant au moins 2 heures, puis on coupe de nouveau le vide et on introduit sous azote l'autre moitié du polyuréthane-(méth)acrylique P1 en maintenant le mélange sous agitation à une température T3. On refroidit ensuite le milieu à une température T4, à 80°C environ, on coupe le vide puis on introduit le photo-amorceur radicalaire SPEEDCURE® TPO-L sous atmosphère d'azote sous vive agitation. Après addition, le vide est rétabli et le mélange est agité durant 10 minutes supplémentaires.
La composition adhésive obtenue est stockée dans une cartouche en aluminium préalablement séchée à l'étuve à 100°C et étanche à l'humidité.
Le protocole expérimental appliqué pour l'exemple 1A est reproduit de la même manière pour les exemples 2A à 5A en tenant compte des ingrédients figurant dans le tableau 2.

| Ingrédients de la composition adhésive | **1A** | **2A (comparative)** | **3A** | **4A** | | **5A (comparative)** |
|---|---|---|---|---|---|---|
| P1 | 51,5 | 29,0 | - | - | | 51,5 |
| P2 | - | - | 51,5 | - | | - |
| P3 | - | - | - | 51,5 | | - |
| DERTOPHENE® H150 | 47,5 | 70,0 | 47,5 | 47,5 | | - |
| Sylvalite RE100 | - | - | - | - | | 47,5 |
| Photo-amorceur radicalaire | 1,0 | 1,0 | 1,0 | 1,0 | | 1,0 |

### Caractérisations :

Les mesures suivantes sont réalisées de la même manière sur les différentes compositions adhésives 1A à 5A obtenues :
- La viscosité de la composition adhésive est mesurée à 80°C à l'aide d'un viscosimètre Brookfield RVT couplé avec un module chauffant de type Thermosel de la marque Brookfield, avec un mobile numéro 27 à une vitesse de rotation de 20 tours par minute. Cette viscosité est exprimée en millipascal seconde.
- En outre, on a évalué visuellement l'aspect général de chaque composition adhésive (lumière visible). Les compositions adhésives 1A à 5A sont toutes transparentes.

Les valeurs de viscosité mesurées sont regroupées dans le tableau 3.

| Caractéristiques de la composition adhésive | **1A** | **2A (comparative)** | **3A** | **4A** | **5A (comparative)** |
|---|---|---|---|---|---|
| Viscosité à 80°C (Pa.s) | 15 | 40,5 à 100°C car solide à 80°C | 22,7 | 19,6 | 3,25 |

### C. Mesures

### Préparation d'une couche support PET revêtue de la composition adhésive réticulée, à raison de 50 g/m² :

On utilise comme couche support une feuille rectangulaire de PolyEthylèneTéréphtalate (PET) d'épaisseur 50 µm et de dimensions 20 cm sur 40 cm.
On préchauffe la composition 1A obtenue à une température T5 allant de 70°C à 150°C et de préférence de 100°C à 120°C et on l'introduit dans une cartouche d'où l'on extrude un cordon qui est déposé près du bord de la feuille parallèlement à sa largeur.
La composition renfermée dans ce cordon est ensuite répartie sur la totalité de la surface de la feuille, de manière à obtenir une couche uniforme et d'épaisseur sensiblement constante.
On utilise pour cela un tire-film (également dénommé filmographe) qui est déplacé du bord de la feuille au bord opposé. On dépose ainsi une couche de composition correspondant à un grammage de 50 g/m², ce qui représente environ une épaisseur de l'ordre de 50 µm.
La feuille est alors contrecollée sur une couche anti-adhérente protectrice consistant en un film siliconé, rectangulaire et de mêmes dimensions.
La complexe de PET/film siliconé ainsi revêtu est alors placé sous un faisceau UV (lampe au mercure) de préférence pendant 1 minute.

La couche support PET ainsi obtenue est soumise aux tests décrits ci-après.
Le protocole expérimental appliqué et les tests réalisés pour le système multicouche obtenu à l'aide de la composition 1A sont reproduits de la même manière pour les exemples 2A à 5A.

### Test de pelage à 180° sur plaque d'acier inoxydable :

Le pouvoir adhésif est évalué par le test de pelage (ou peel) à 180° sur plaque d'acier inoxydable tel que décrit dans la méthode FINAT n° 1, publiée dans le Manuel Technique FINAT 6ème édition, 2001. FINAT est la fédération internationale des fabricants et transformateurs d'étiquettes auto-adhésives. Le principe de ce test est le suivant.
Une éprouvette sous forme de bande rectangulaire (25 mm x 150 mm) est découpée dans la couche support PET revêtu de la composition réticulée obtenue précédemment. Cette éprouvette est fixée sur les 2/3 de sa longueur (après enlèvement de la portion de couche anti-adhérente protectrice correspondante), sur un substrat constitué d'une plaque d'acier inoxydable dégraissée, en appliquant deux passages d'un rouleau de 1 kilo. L'assemblage obtenu est laissé 15 minutes à température ambiante. Il est alors placé dans un appareil de traction capable, à partir de l'extrémité restée libre de la bande rectangulaire, d'effectuer le pelage ou décollement de la bande sous un angle de 180° et avec une vitesse de séparation de 300 mm par minute. L'appareil mesure la force requise pour décoller la bande dans ces conditions. Les résultats sont exprimés en newton par centimètre (N/cm) et sont indiqués dans le tableau 4 suivant.
Par ailleurs, on mesure le faciès de rupture visuellement, selon l'état des surfaces décollées. On note « RA » pour rupture adhésive, lorsque l'on observe que la totalité du joint adhésif est resté collé à la couche support PET. On note « RC » pour rupture cohésive, lorsque l'on observe que le joint adhésif a été rompu et est resté pour une partie collé à la couche support PET et pour l'autre partie collé au substrat. Les résultats sont indiqués dans le tableau 4.

### Test d'adhésion instantanée (également dénommé test de la boucle) :

Le pouvoir collant immédiat ou tack est évalué par le test d'adhésion instantanée dit de la boucle, décrit dans la méthode FINAT n° 9, dont le principe est le suivant.
Une éprouvette sous forme de bande rectangulaire (25 mm x 150 mm) est découpée dans la couche support PET revêtu de la composition réticulée obtenue précédemment. Après enlèvement de la totalité de la couche anti-adhérente protectrice, les 2 extrémités de cette bande sont jointes de manière à former une boucle dont la couche adhésive est orientée vers l'extérieur. Les 2 extrémités jointes sont placées dans la mâchoire mobile d'un appareil de traction capable d'imposer une vitesse de déplacement de 300 mm/minute selon un axe vertical avec possibilité d'aller et retour. La partie inférieure de la boucle placée en position verticale est d'abord mise en contact avec une plaque de verre horizontale de 25 mm sur 30 mm sur une zone carrée d'environ 25 mm de côté. Dès cette mise en contact, le sens de déplacement de la mâchoire est inversé. Le pouvoir collant immédiat est la valeur maximale de la force nécessaire pour que la boucle se décolle complètement de la plaque. Les résultats sont exprimés en newton par centimètre carré (N/cm²) et sont indiqués dans le tableau 4. Par ailleurs, on mesure le faciès de rupture visuellement, selon l'état des surfaces décollées. On note « RA » pour rupture adhésive : en particulier, on observe que la totalité du joint adhésif est resté collé à la couche support PET. On note « RC » pour rupture cohésive : on observe que le joint adhésif a été rompu et est resté pour une partie collé à la couche support PET et pour l'autre partie collé au substrat. Les résultats sont indiqués dans le tableau 4.

### Température entraînant la rupture du joint de colle au cisaillement statique :

Le maintien en température du pouvoir adhésif est évalué par le test de détermination de la température entraînant la rupture du joint de colle au cisaillement statique. Ce test est également connu sous sa dénomination anglaise de « Shear Adhesion Failure Temperature » (ou SAFT).

Une éprouvette sous forme de bande rectangulaire (25 mm x 75 mm) est découpée dans chacune dans un multicouche PET / adhésif (50 g/m²) / Release Liner après réticulation de l'adhésif sous irradiation UV. Après enlèvement de la totalité de la couche protectrice (ou « release liner « en anglais), une portion carrée de 25 mm de côté située à l'extrémité de la bande adhésive est fixée sur une plaque de inox. La plaque d'essai ainsi obtenue est placée, au moyen d'un support approprié, en position sensiblement verticale dans une étuve à 23°C, la partie non collée de la bande de longueur 50 mm se situant en dessous de la plaque. Après équilibrage thermique à 23°C, la partie restée libre de la bande est reliée à une masse de 0,5 kg, l'ensemble du dispositif restant ensuite dans l'étude pendant toute la durée du test. La valeur de SAFT est ensuite mesurée conformément à la méthode d'essai PSTC-17 avec une montée en température de l'étuve de 0,4 °C par minute. On note la température à laquelle la bande se décroche de la plaque à la suite de la rupture du joint de colle sous l'effet de cette contrainte.
Dans le présent test, il a été vérifié si l'adhésif résiste toujours à une température de 170°C.

| Tests de la composition adhésive réticulée sur support | **1A** | **2A** (comparative) | **3A** | **4A** | **5A** (comparative) |
|---|---|---|---|---|---|
| SAFT (170°C) | OUI | NON | OUI | OUI | NON |
| Peel 180° sur acier inoxydable (N/cm) | 30,0 | 0,0 | 19,0 | 20,5 | 0,3 |
| Adhésion instantanée de la boucle sur verre (N/cm²) | 16,9 | 0,0 | 19,4 | 35,7 | 0,0 |
| | RA | RA | RA | RA | RA |

Ainsi, tous les adhésifs obtenus à partir des exemples 1A, 3A, et 4A selon l'invention, conduisent à des performances adhésives satisfaisantes en termes de force d'adhésion et de tack. En outre, les valeurs obtenues à l'issue du test de pelage et à l'issu du test d'adhésion instantanée de la boucle sont strictement supérieures à 2N/cm² respectivement, qui sont les valeurs minimales souhaitées pour obtenir un pouvoir auto-adhésif.

En outre, les compositions des exemples 1A, 3A, et 4A présentent avantageusement une bonne tenue en température (SAFT 170°C) contrairement aux compositions 2A et 5A.

Pour les exemples comparatifs 2A et 5A, ces conditions cumulées ne sont pas remplies, et de fait l'adhésif obtenu est peu performant et ne convient pas comme auto-adhésif.

La composition 1A diffère de celle de la composition comparative 5A de par la nature de la résine tackifiante. La composition 1A conduit à un adhésif présentant de meilleures propriétés d'adhésion et de tack, et de résistance à haute température que celui obtenu avec la composition 5A.

La composition 1A diffère de celle de la composition comparative 2A de par le ratio massique polyuréthane P1 : résine tackifiante b). La composition 1A conduit à un adhésif présentant de meilleures propriétés d'adhésion et de tack, et de résistance à haute température que celui obtenu avec la composition 2A.

## Revendications

1. Composition adhésive thermofusible sensible à la pression comprenant :
(a) au moins un polyuréthane comprenant au moins deux fonctions terminales T de formule (I) suivante :
-X-(C=O)-CH(R^{V})=CH₂ (I)
dans laquelle R^{V} représente un atome d'hydrogène ou un radical méthyle, X représente -O- ou -NR'^{N}- avec R'^{N} représentant un atome d'hydrogène ou un radical alkyle linéaire ou ramifié comprenant de 1 à 20 atomes de carbone, de préférence de 1 à 12 atomes de carbone, préférentiellement de 1 à 8 atomes de carbones, X représentant avantageusement -O- ;
(b) au moins une résine tackifiante choisie parmi les résines suivantes :
(b1) les résines terpènes-phénoliques ;
(b2) les résines issues de la polymérisation d'alpha-méthyl styrène, suivie éventuellement d'une réaction avec au moins un phénol;
(b3) les résines polymériques (éventuellement au moins partiellement hydrogénées) issues de coupes aromatiques principalement en C9 ; et
(c) au moins un inhibiteur de polymérisation ;
ladite composition étant **caractérisée en ce que** :
- le ratio massique polyuréthane(s) (a) : résine(s) tackifiante(s) (b) va de 4 : 6 à 6 : 4 ; et
- ledit polyuréthane (a) a une fonctionnalité moyenne en fonctions de formule (I) strictement supérieure à 1,9, de préférence supérieure ou égale à 2.

2. Composition selon la revendication 1, dans laquelle la teneur massique totale de polyuréthane(s) (a) va de 30% à 70% en poids, de préférence de 35% à 65% en poids, plus préférentiellement de 40% à 60% en poids par rapport au poids total de la composition.

3. Composition selon l'une quelconque des revendications 1 ou 2, dans laquelle le polyuréthane (a) comprenant au moins deux fonctions terminales T de formule (I) est préparé par un procédé comprenant les étapes suivantes:
- E1) la préparation d'un polyuréthane comprenant au moins deux fonctions terminales NCO par une réaction de polyaddition:
i) d'au moins un polyisocyanate de préférence choisi parmi les diisocyanates, les triisocyanates, et leurs mélanges ;
ii) avec au moins un polyol, de préférence choisi parmi les polyéther polyols, les polyester polyols, les polyène polyols, les polycarbonate polyols, les poly(éther-carbonate) polyols, les polymères à terminaisons -OH, et leurs mélanges ;
dans des quantités telles que le rapport molaire NCO/OH, noté (r1), est strictement supérieur à 1, de préférence va de 1,60 à 1,90, et préférentiellement va de 1,65 à 1,85; et
- E2) la réaction du produit formé à l'issue de l'étape E1) avec au moins un ester hydroxylé de l'acide (méth)acrylique ou au moins une amide hydroxylée de l'acide (méth)acrylique, dans des quantités telles que le rapport molaire OH/NCO, noté (r2), est inférieur ou égal à 1,00, de préférence allant de entre 0,75 à 1,00, et préférentiellement entre 0,80 à 0,90.

4. Composition selon la revendication 3, dans laquelle :
- l'ester hydroxylé de l'acide (méth)acrylique a la formule (II) suivante :
CH₂=CR^{V}-C(=O)-O-R^{AC}-OH (II)
dans laquelle R^{V} représente un atome d'hydrogène ou un radical méthyle, R^{AC} représente un radical hydrocarboné divalent linéaire ou ramifié, aliphatique ou cyclique, saturé ou insaturé, comprenant de préférence de 2 à 240 atomes de carbone, et/ou éventuellement interrompu par un ou plusieurs hétéroatomes, et/ou éventuellement interrompu par un ou plusieurs groupes divalents -N(R"^{N})- avec R"^{N} représentant un radical alkyle linéaire ou ramifié comprenant de 1 à 22 atomes de carbone, -C(=O)O-, -C(=O)NH-, -NHC(=O)O-, -NHC(=O)-NH-, ou -C(=O)-, et/ou étant éventuellement substitué ;
- l'amide hydroxylée de l'acide (méth)acrylique a la formule (II') suivante :
CH₂=CR^{V}-C(=O)-N(R'^{N})-R^{AM}-OH (II')
dans laquelle R^{V} représente un atome d'hydrogène ou un radical méthyle, R'^{N} représentant H ou un radical alkyle comprenant de 1 à 22 atomes de carbone, de préférence de 1 à 18, préférentiellement de 1 à 14, et encore plus avantageusement de 1 à 6 atomes de carbone, et R^{AM} représente un radical hydrocarboné divalent linéaire ou ramifié, aliphatique ou cyclique, saturé ou insaturé, comprenant de préférence de 1 à 240 atomes de carbone, et/ou éventuellement interrompu par un ou plusieurs hétéroatomes, et/ou éventuellement interrompu par un ou plusieurs groupes divalents -N(R"^{N})- avec R"^{N} représentant un radical alkyle linéaire ou ramifié comprenant de 1 à 22 atomes de carbone, -C(=O)O-, -C(=O)NH-, -NHC(=O)O-, - NHC(=O)-NH-, ou -C(=O)-, et/ou étant éventuellement substitué.

5. Composition selon l'une quelconque des revendications 3 ou 4, dans laquelle le(s) polyol(s) utilisable(s) est(sont) choisi(s) parmi ceux dont la masse molaire moyenne en nombre (Mn) va de 2 000 à 12 000 g/mol, de préférence de 3 000 à 11 000 g/mol, et plus préférentiellement de 4 000 à 10 000 g/mol.

6. Composition selon l'une quelconque des revendications 3 à 5, **caractérisée en ce que** l'étape E1) est mise en œuvre en présence d'un diol ayant une masse moléculaire moyenne en nombre (Mn) supérieure ou égale à 4 000 g/mol, ou en présence d'un mélange de polyols comprenant un ou plusieurs diol(s) dont la masse moléculaire moyenne en nombre (Mn) est supérieure ou égale à 4 000 g/mol.

7. Composition selon la revendication 6, **caractérisée en ce que** tous les diols utilisés ont nécessairement une masse moléculaire moyenne en nombre (Mn) supérieure ou égale à 4 000 g/mol.

8. Composition selon l'une quelconque des revendications 3 à 7, **caractérisée en ce que** l'étape E1) est mise en œuvre :
- avec un unique diol de masse moléculaire moyenne en nombre (Mn) supérieure ou égale à 4 000 g/mol ; ou
- avec un mélange d'un diol de masse moléculaire moyenne en nombre (Mn) supérieure ou égale à 4 000 g/mol, et d'un triol ayant avantageusement une masse moléculaire moyenne en nombre (Mn) supérieure ou égale à 2 000 g/mol.

9. Composition selon l'une quelconque des revendications 3 à 8, **caractérisée en ce que** le(s) polyisocyanate(s) de l'étape E1) est(sont) choisi(s) dans le groupe constitué du toluène diisocyanate, du méta-xylylène diisocyanate, de l'isophorone diisocyanate, des allophanates de HDI, et de leurs mélanges.

10. Composition selon l'une quelconque des revendications 1 à 9, dans laquelle le polyuréthane (a) est obtenu par un procédé comprenant les étapes suivantes :
- E1) la préparation d'un polyuréthane comprenant au moins deux fonctions terminales NCO par réaction de polyaddition :
i) d'au moins un diisocyanate choisi dans le groupe constitué du toluène diisocyanate, du méta-xylylène diisocyanate, de l'isophorone diisocyanate, des allophanates de HDI, et de leurs mélanges ;
ii) avec au moins un polyéther diol ayant une masse moléculaire moyenne en nombre (Mn) supérieure ou égale à 4 000 g/mol, ou avec un mélange de polyéther diol ayant une masse moléculaire moyenne en nombre (Mn) supérieure ou égale à 4 000 g/mol avec un polyéther triol ayant avantageusement une masse moléculaire moyenne en nombre (Mn) supérieure ou égale à 2 000 g/mol ;
- E2) la réaction du produit formé à l'issue de l'étape E1) avec au moins un ester hydroxylé de l'acide acrylique de formule (II-1-1) :
CH₂=CH-C(=O)-O-CH₂-CH₂-OH
dans des quantités telles que le rapport molaire OH/NCO (noté r2) est inférieur ou égal à 1,00.

11. Composition selon l'une quelconque des revendications 1 à 10, dans laquelle la résine (b1) terpènes-phénolique est une résine terpène modifiée phénol obtenue par polymérisation d'hydrocarbures terpéniques en présence d'au moins un catalyseur de Friedel-Crafts, suivie d'une réaction avec au moins un phénol.

12. Composition selon l'une quelconque des revendications 1 à 11, **caractérisée en ce qu'**elle ne comprend pas d'autres résines tackifiantes que les résines tackifiantes (b1), (b2) et (b3).

13. Composition selon l'une quelconque des revendications 1 à 12, **caractérisée** en qu'elle comprend au moins un inhibiteur de polymérisation (c) dans une teneur massique inférieure ou égale à 3% en poids par rapport au poids total de la composition, de préférence dans une teneur massique allant de 0,005% à 2% en poids par rapport au poids total de la composition.

14. Composition selon l'une quelconque des revendications 1 à 13, **caractérisée** en qu'elle comprend de 0% à 5% en poids, de préférence de 0% à 3% en poids, encore plus préférentiellement de 0,1% à 2% en poids, et encore plus avantageusement de 0,5% à 1,5% en poids de photo-amorceur(s) radicalaire(s) par rapport au poids total de la composition.

15. Composition selon l'une quelconque des revendications 1 à 14, **caractérisée** en que le ratio massique polyuréthane(s) (a) : résine(s) tackifiante(s) (b) va de 45 : 55 à 55 : 45, préférentiellement il est égal à 50 : 50.

16. Composition selon l'une quelconque des revendications 1 à 15, **caractérisée** en qu'elle comprend :
(a) de 35 à 65 % en poids de polyuréthane(s) tel(s) que défini précédemment,
(b) de 33 à 60 % en poids de résine(s) tackifiante(s) (b) telle(s) que définie(s) précédemment,
(c) au moins un inhibiteur de polymérisation,
(d) de 0% à 3 % en poids de photo-amorceur radicalaire(s),
(e) de 0% à 20 % en poids d'au moins un additif choisi parmi les promoteurs d'adhésion, les agents rhéologiques, les agents thixotropes, les plastifiants, les agents opacifiants, les pigments, les colorants, et les charges.

17. Procédé de préparation de la composition telle que définie selon l'une quelconque des revendications 1 à 16 comprenant :
(i) une étape de fonte de la ou les résine(s) tackifiante(s) (b), le cas échéant en mélange avec un ou plusieurs inhibiteur(s) de polymérisation (c) à une température T3,
(ii) une étape d'incorporation et de mélange, sous atmosphère inerte, du ou des polyuréthanes (a),
(iii) une étape de refroidissement dudit mélange, à une température T4 inférieure à T3, puis,
(iv) une éventuelle étape d'incorporation dans ledit mélange du ou des photo-amorceur radicalaire(s) de réticulation (d), et le cas échéant, du ou des autres additif(s) e) choisi parmi les promoteurs d'adhésion, les agents rhéologiques, les agents thixotropes, les plastifiants, les agents opacifiants, les pigments, les colorants, et les charges.

18. Utilisation de la composition telle que définie selon l'une quelconque des revendications 1 à 16 pour la préparation de support auto-adhésif.

19. Support auto-adhésif susceptible d'être obtenu par un procédé comprenant les étapes suivantes :
(i') préchauffage à une température T5 de la composition telle que définie selon l'une quelconque des revendications 1 à 16 afin d'obtenir un liquide ayant une viscosité inférieure à 10 000 mPa.s à T5,
(ii') enduction de ladite composition sur une couche support, puis
(iii') réticulation de ladite composition par irradiation sous un faisceau UV ou sous un rayonnement d'électrons e-beam, avec un temps d'irradiation compris entre 1 seconde et 2 minutes, préférentiellement entre 1 seconde et 1 minute.
